# EUROPEAN PATENT SPECIFICATION

(11) **EP 4 137 308 B1**
(45) Date of publication and mention of the grant of the patent: **19.03.2025**
(21) Application number: 21809857.2
(22) Date of filing: 21.05.2021
(51) Int. Cl.: B32B 5/22, C08F 20/22, C08F 20/26, C08L 27/14, C08L 101/00, C08K 3/01, H01M 50/409

(54) **POROUS FILM, SEPARATOR FOR SECONDARY BATTERY, AND SECONDARY BATTERY**
PORÖSER FILM, SEPARATOR FÜR SEKUNDÄRBATTERIE UND SEKUNDÄRBATTERIE
FILM POREUX, SÉPARATEUR POUR BATTERIE SECONDAIRE ET BATTERIE SECONDAIRE

(30) Priority: 22.05.2020 JP 2020089599; 30.11.2020 JP 2020198675
(43) Date of publication of application: 22.02.2023
(73) Proprietor: Toray Industries, Inc., Tokyo 103-8666 (JP)
(72) Inventor: KAI Nobuyasu, Otsu-shi, Shiga 520-8558 (JP); KAMON Keiichi, Otsu-shi, Shiga 520-8558 (JP); TANAKA Hiroko, Nasushiobara-shi, Tochigi 329-2763 (JP); TSUKUDA Akimitsu, Otsu-shi, Shiga 520-8558 (JP); IMAZU Naoki, Nagoya-shi, Aichi 455-8502 (JP)
(74) Representative: Prüfer & Partner mbB Patentanwälte · Rechtsanwälte
(86) International application number: PCT/JP2021/019319
(87) International publication number: WO 2021/235538

(56) References cited:
- WO-A1-2015/186363
- WO-A1-2018/037867
- WO-A1-2018/173717
- JP-A- 2020 077 618
- JP-A- 2020 077 618

## Description

### TECHNICAL FIELD

The present invention relates to a porous film, a separator for secondary batteries, and a secondary battery.

### BACKGROUND ART

Secondary batteries such as lithium ion batteries are widely used for automotive applications such as electric vehicles, hybrid vehicles, and plug-in hybrid vehicles, portable digital devices such as smartphones, tablets, mobile phones, laptop PCs, digital cameras, digital video cameras, and portable game consoles, and others such as electric tools, electric bikes, and electric assisted bicycles.

In general, a lithium ion battery contains a positive electrode formed by laying a positive electrode active material on a positive electrode collector and a negative electrode formed by laying a negative electrode active material on a negative electrode collector, with a secondary battery separator and an electrolyte interposed between them.

A polyolefin based porous base is used in secondary battery separators. Features required of these secondary battery separators include having a porous structure containing an electrolyte to permit ion migration and having a shutdown property that allows electric discharge to be stopped in the event of abnormal heat generation in a lithium ion battery as a result of undergoing thermal melting so that the porous structure is closed to halt the ion migration.

As secondary batteries with larger capacities and larger output are developed, secondary battery separators are now required to have higher safety characteristics and also have thermal dimensional stability high enough to prevent short-circuiting from being caused by contact between the positive electrode and the negative electrode that can occur when the secondary battery separator undergoes heat shrinkage at high temperatures.

In addition, there are increased demands for separators maintaining strong adhesion to the electrodes before impregnation with electrolyte. This is required to maintain the structure of a layered body composed of a positive electrode, separator, and negative electrode during its conveyance in the secondary battery manufacturing process, to prevent the shape deformation of a layered body composed of a rolled-up positive electrode, separator, and negative electrode when it is inserted in a cylindrical or angular can after being hot-pressed, to achieve an increased energy density by hot pressing such layered bodies so that a larger number of them can be inserted in a can, or to prevent shape deformation of a case containing a laminate type battery.

On the other hand, there are also demands for lithium ion batteries having excellent battery characteristics to realize larger output and longer life, making it necessary to develop products that maintain good battery characteristics without undergoing a decline in its high output characteristics.

It is also required to provide secondary battery separators having such characteristics at low costs.

To meet these demands, Patent document 1 proposes the formation of an adhesion layer on the heat resistant layer to realize both good adhesion to the electrodes and high blocking resistance. Patent document 2 proposes the use of polymer particles and inorganic particles that have a particular relation between their particle diameters to realize good adhesion to the electrodes.

Patent document 3 discloses a porous film comprising a porous base and a porous layer containing particles disposed at least on one side thereof, wherein the particles contain a copolymer of trifluoroethyl methacrylate and hydroxyethyl methacrylate, with the (meth)acrylate monomer having a hydroxyl group accounting for 2 mass% of all components of the particles, which account for 100 mass%.

### PRIOR ART DOCUMENTS

### PATENT DOCUMENTS

Patent document 1: Japanese Patent No. 6191597
Patent document 2: International Publication WO 2018/034094
Patent document 3: JP2020077618A

### SUMMARY OF INVENTION

### PROBLEMS TO BE SOLVED BY THE INVENTION

As described above, it is necessary to realize good adhesion between the electrodes and the separator by performing a hot pressing step in the secondary battery production process. Excellent battery characteristics are also required currently and it is necessary to develop a low cost process that can ensure high thermal dimensional stability and good adhesion while realizing both high output characteristics and long life with good battery characteristics.

In view of the above problems, the main object of the present invention is to provide, at low cost, a porous film that has high thermal dimensional stability and good adhesion to electrodes and also has excellent battery characteristics.

### MEANS OF SOLVING THE PROBLEMS

The present inventors made intensive study aiming to provide a low cost porous film that ensures high thermal dimensional stability and good adhesion to electrodes and also realizes excellent battery characteristics. As a result, it was found that the test conditions used for the blocking resistance test described in the Patent documents 1 and 2 are not appropriate, that the technique described in Patent document 1 fails to achieve a sufficiently high blocking resistance under appropriate test conditions, and that the proposed improvement in blocking resistance leads to insufficient adhesion to the electrodes. It was also found that the implementation of hot pressing causes swelling of the adhesion layer to fill voids in the electrode active material and separator, and as a result, the porosity decreases and the ion transport rate also decreases, leading to deterioration in battery characteristics. In addition, the secondary battery separator proposed in Patent document 1 requires large cost to form an adhesive layer on a heat resistant layer, and therefore, it is difficult for the techniques described in Patent documents 1 and 2 to achieve required thermal dimensional stability, adhesion, and battery characteristics all at once at low cost.

To solve the above problems, the porous film according to the present invention has a structure as described below.
(1) A porous film including a porous base and a porous layer containing particles A disposed at least on one side thereof, wherein the particles A contain a mixture including a polymer formed from a fluorine-containing (meth)acrylate monomer and a polymer formed from a (meth)acrylate monomer having a hydroxyl group or a copolymer including a fluorine-containing (meth)acrylate monomer and a (meth)acrylate monomer having a hydroxyl group, with the (meth)acrylate monomer having a hydroxyl group accounting for more than 2 mass% and 30 mass% or less of all components of the particles A, which account for 100 mass%.
(2) A porous film as set forth in (1), wherein the (meth)acrylate monomer having a hydroxyl group is characterized in that a homopolymer formed from the monomer has a glass transition temperature of -100°C or more and 0°C or less.
(3) A porous film as set forth in either (1) or (2), wherein the (meth)acrylate monomer having a hydroxyl group is at least one selected from the group consisting of 2-hydroxyethyl acrylate, 4-hydroxybutyl acrylate, and 2-hydroxypropyl acrylate.
(4) A porous film as set forth in any one of (1) to (3), wherein the copolymer including a fluorine-containing (meth)acrylate monomer and a (meth)acrylate monomer having a hydroxyl group further includes a monomer having two or more reactive groups in a molecule, with the monomer having two or more reactive groups in a molecule accounting for 1 mass% or more and 10 mass% or less of the particles A.
(5) A porous film as set forth in (4), wherein the monomer having two or more reactive groups in a molecule is a (meth)acrylate having two or more reactive groups in a molecule.
(6) A porous film as set forth in either (4) or (5), wherein the monomer having two or more reactive groups in a molecule is alkylene glycol di(meth)acrylate or urethane di(meth)acrylate.
(7) A porous film as set forth in any one of (4) to (6), wherein the monomer having two or more reactive groups in a molecule is characterized in that a homopolymer formed from the monomer has a glass transition temperature of -50°C or more and 0°C or less.
(8) A porous film as set forth in any one of (1) to (7), wherein the copolymer including a fluorine-containing (meth)acrylate monomer and a (meth)acrylate monomer having a hydroxyl group further includes at least one monomer selected from the group consisting of isobornyl (meth)acrylate, dicyclopentanyl (meth)acrylate, dicyclopentenyl (meth)acrylate, cyclohexyl (meth)acrylate, and benzyl (meth)acrylate.
(9) A porous film as set forth in any one of (1) to (8), wherein the copolymer including a fluorine-containing (meth)acrylate monomer and a (meth)acrylate monomer having a hydroxyl group further includes a (meth)acrylate monomer having a monocyclic hydrocarbon group or a (meth)acrylate monomer substituted by at least one alkyl group.
(10) A porous film as set forth in (9), wherein the (meth)acrylate monomer having a monocyclic hydrocarbon group accounts for 20 mass% or more and 80 mass% or less of all components of the particles A, which account for 100 mass%.
(11) A porous film as set forth in any one of (1) to (10), wherein the fluorine-containing (meth)acrylate monomer contained in the particles A accounts for more than 20 mass% and 80 mass% or less.
(12) A porous film as set forth in any one of (1) to (11), wherein the porous layer contains particles B that are inorganic particles.
(13) A porous film as set forth in (12), wherein the particles B contained in the porous layer account for 60 mass% or more and 95 mass% or less of all components of the porous layer, which account for 100 mass%.
(14) A porous film as set forth in any one of (1) to (13), wherein the porous layer contains fluorine-free organic particles C.
(15) A secondary battery separator including a porous film as set forth in any one of (1) to (14).
(16) A secondary battery including a secondary battery separator as set forth in (15).

### ADVANTAGEOUS EFFECTS OF THE INVENTION

The porous film according to the present invention includes a porous base and a porous layer containing particles A disposed at least on one side thereof, wherein the particles A contain a mixture including a polymer formed from a fluorine-containing (meth)acrylate monomer and a polymer formed from a (meth)acrylate monomer having a hydroxyl group or a copolymer including a fluorine-containing (meth)acrylate monomer and a (meth)acrylate monomer having a hydroxyl group, with the (meth)acrylate monomer having a hydroxyl group accounting for more than 2 mass% and 30 mass% or less of all components of the particles A, which account for 100 mass%. The porous film thus obtained serves to realize a low cost process for producing a secondary battery that achieves a high thermal dimensional stability and strong adhesion to electrodes and also has excellent battery characteristics.

### DESCRIPTION OF PREFERRED EMBODIMENTS

The porous film according to the present invention is a porous film including a porous base and a porous layer, and more specifically, a porous layer containing particles A is formed at least on one side of the porous base.

The porous film according to the present invention is described in detail below.

### [Porous layer]

### (Particles A)

The porous layer according to the present invention contains particles A. The particles A contain a mixture including a polymer formed from a fluorine-containing (meth)acrylate monomer and a polymer formed from a (meth)acrylate monomer having a hydroxyl group or a copolymer including a fluorine-containing (meth)acrylate monomer and a (meth)acrylate monomer having a hydroxyl group.

In the present Description, "a polymer formed from a fluorine-containing (meth)acrylate monomer" is either a homopolymer formed from a fluorine-containing (meth)acrylate monomer or a copolymer incorporating a fluorine-containing (meth)acrylate monomer. Furthermore, "a polymer formed from a (meth)acrylate monomer having a hydroxyl group" is either a homopolymer formed from a (meth)acrylate monomer having a hydroxyl group or a copolymer incorporating a (meth)acrylate monomer having a hydroxyl group. In addition, the "organic resin" that forms the particles A may occasionally be a homopolymer formed from a fluorine-containing (meth)acrylate monomer, a homopolymer formed from a (meth)acrylate monomer having a hydroxyl group, a homopolymer formed from a monomer selected from a group of specific monomers, and a copolymer formed from a fluorine-containing (meth)acrylate monomer and a (meth)acrylate monomer having a hydroxyl group.

If a polymer formed from a fluorine-containing (meth)acrylate monomer or a copolymer formed from a fluorine-containing (meth)acrylate monomer and a (meth)acrylate monomer having a hydroxyl group is contained, it works to decrease the surface free energy of the particles A, and if a coating liquid containing the particles A is spread over a porous base, the particles A will be localized on the surface, leading to improved adhesion between the porous layer and electrodes. For the present invention, a (meth)acrylate refers to an acrylate and/or a methacrylate.

Examples of such fluorine-containing (meth)acrylate monomers include 2,2,2-trifluoroethyl (meth)acrylate, 2,2,3,3,3-pentafluoropropyl (meth)acrylate, 2-(perfluorobutyl)ethyl (meth)acrylate, 3-(perfluorobutyl)-2-hydroxypropyl (meth)acrylate, 2-(perfluorohexyl)ethyl (meth)acrylate, 3-perfluorohexyl-2-hydroxypropyl (meth)acrylate, 3-(perfluoro-3-methylbutyl)-2-hydroxypropyl (meth)acrylate, 1H,1H,3H-tetrafluoropropyl (meth)acrylate, 1H,1H,5H-octafluoropentyl (meth)acrylate, 1H,1H,7H-dodecafluoroheptyl (meth)acrylate, 1H-1-(trifluoromethyl)trifluoroethyl (meth)acrylate, 1H,1H,3H-hexafluorobutyl (meth)acrylate, 1,2,2,2-tetrafluoro-1-(trifluoromethyl)ethyl (meth)acrylate, and 2-(perfluorooctyl)ethyl (meth)acrylate. Fluorine-containing (meth)acrylate monomers may be used singly or two or more thereof may be used in combination at an appropriate ratio.

The fluorine-containing (meth)acrylate monomer contained in the particles A preferably accounts for more than 20 mass%, more preferably 22 mass% or more, still more preferably 25 mass% or more, and still more preferably 30 mass% or more of all components of the particles A, which account for 100 mass%. On the other hand, the content is preferably 80 mass% or less, more preferably 60 mass% or less, still more preferably 50 mass% or less, still more preferably 40 mass% or less, and most preferably 35 mass% or less. If it is in the above range, adequate adhesion to the electrodes is ensured.

Here, generally known methods will be helpful for determining the content of the fluorine-containing (meth)acrylate monomer contained in the particles A. For example, the porous layer is first removed from the porous film using an organic solvent such as water and alcohol, and the organic solvent such as water and alcohol is evaporated sufficiently by drying to separate the components present in the porous layer. An organic solvent that can dissolve organic resin components is added to the resulting components so that only the organic resin components are dissolved. Following this, the organic solvent is evaporated from the solution containing the dissolved organic resin components to extract only the organic resin components. The resulting organic resin components are subjected to magnetic nuclear resonance (¹H-NMR, ¹⁹F-NMR, ¹³C-NMR), infrared absorption spectroscopy (IR), X-ray photoelectron spectroscopy (XPS), X-ray fluorescence analysis (EDX), elemental analysis, pyrolysis gas chromatography-mass spectrometry (pyrolysis GC/MS), etc. to measure the intensities of signals that represent the fluorine-containing (meth)acrylate monomer, which are then used for calculation. In particular, after confirming the existence of a fluorine-containing (meth)acrylate monomer by pyrolysis GC/MS, ¹³C-NMR (the organic resin components and an appropriate quantity of a solvent (deuterochloroform) are put in a solid NMR specimen tube, left to stand overnight, and subjected to DD/MAS analysis for measurement) is performed to determine the content of the fluorine-containing (meth)acrylate monomer.

It is preferable for the fluorine-containing (meth)acrylate present in the fluorine-containing (meth)acrylate monomer to have 3 or more and 13 or less fluorine atoms. The number is more preferably 3 or more and 9 or less, and still more preferably 3 or more and 5 or less. If it is in the above range, it serves to allow the particles A to have a smaller surface free energy and at the same time achieve high spreadability. If the number of fluorine atoms is 3 or more, a sufficient decrease in the surface free energy of the particles A is realized to ensure sufficiently strong adhesion to electrodes. If the number of fluorine atoms is 13 or less, a sufficient spreadability on a porous base is ensured to achieve improved productivity.

Here, generally known methods will be helpful for determining the number of fluorine atoms in a fluorine-containing (meth)acrylate. For example, the porous layer is first removed from the porous film using an organic solvent such as water and alcohol, and the organic solvent such as water and alcohol is evaporated sufficiently by drying to separate the components present in the porous layer. An organic solvent that can dissolve organic resin components is added to the resulting components so that only the organic resin components are dissolved. Following this, the organic solvent is evaporated from the solution containing the dissolved organic resin components to extract only the organic resin components. The resulting organic resin components are subjected to magnetic nuclear resonance (¹H-NMR, ¹⁹F-NMR, ¹³C-NMR), infrared absorption spectroscopy (IR), X-ray photoelectron spectroscopy (XPS), X-ray fluorescence analysis (EDX), elemental analysis, pyrolysis gas chromatography-mass spectrometry (pyrolysis GC/MS), etc. to measure the intensities of signals that represent the fluorine-containing (meth)acrylate monomer, which are then used for calculation. Of these, pyrolysis GC/MS is particularly useful.

The particles A contains a polymer formed from a (meth)acrylate monomer having a hydroxyl group or contains a copolymer formed from a (meth)acrylate monomer having a hydroxyl group and a fluorine-containing (meth)acrylate monomer, and because of this, the glass transition temperature of the particles A can be adjusted to ensure strong adhesion to electrodes.

Examples of such a (meth)acrylate monomer having a hydroxyl group include hydroxymethyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, 7-hydroxyheptyl (meth)acrylate, and 8-hydroxyoctyl (meth)acrylate. These (meth)acrylate monomers each having a hydroxyl group may be used singly or two or more thereof may be used in combination at an appropriate ratio. In particular, 2-hydroxyethyl acrylate, 4-hydroxybutyl acrylate, and 2-hydroxypropyl acrylate are preferable.

A (meth)acrylate monomer having a hydroxyl group is preferably such that the homopolymer formed from the monomer has a glass transition temperature of -100°C or more, more preferably -70°C or more, and still more preferably -50°C or more. It is preferable for a homopolymer formed from a (meth)acrylate monomer having a hydroxyl group to have a glass transition temperature of 0°C or less, more preferably -10°C or less, and still more preferably -20°C or less. Here, the glass transition temperature referred to in the present Description is defined as the midpoint glass transition temperature determined by differential scanning calorimetry (DSC) according to JIS K7121 (2012). The midpoint glass transition temperature is the temperature at the point where the straight line that is equidistant in the vertical direction from the linear extensions of the baselines intersects the step-like portion of the curve that shows glass transition.

The (meth)acrylate monomer having a hydroxyl group contained in the particles A accounts for 2 mass% or more and 30 mass% or less of all components of the particles A, which account for 100 mass%. The content is preferably 2.5 mass% or more, more preferably 4 mass% or more, still more preferably 10 mass% or more, still more preferably more than 10 mass%, particularly preferably 12 mass% or more, and most preferably 14 mass% or more. On the other hand, it is preferably 25 mass% or less, and more preferably 20 mass% or less. If the (meth)acrylate monomer having a hydroxyl group contained in the particles A accounts for more than 2 mass%, it ensures adequate adhesion to electrodes, increased affinity with the electrolyte to improve battery characteristics, and stronger adhesion to the porous base and inorganic particles to improve the thermal dimensional stability. It also serves to obtain particles that are high in stability after particle formation. On the other hand, if it is 30 mass% or less, it serves to obtain particles that are high in stability after particle formation and suppress excessive swelling into the electrolyte to ensure better battery characteristics and stronger adhesion to electrodes in the electrolyte.

Here, generally known methods will be helpful for determining the content of the (meth)acrylate monomer having a hydroxyl group contained in the particles A. For example, the porous layer is first removed from the porous film using an organic solvent such as water and alcohol, and the organic solvent such as water and alcohol is evaporated sufficiently by drying to separate the components present in the porous layer. An organic solvent that can dissolve organic resin components is added to the resulting components so that only the organic resin components are dissolved. Following this, the organic solvent is evaporated from the solution containing the dissolved organic resin components to extract only the organic resin components. The resulting organic resin components are subjected to magnetic nuclear resonance (¹H-NMR, ¹⁹F-NMR, ¹³C-NMR), infrared absorption spectroscopy (IR), X-ray photoelectron spectroscopy (XPS), X-ray fluorescence analysis (EDX), elemental analysis, pyrolysis gas chromatography-mass spectrometry (pyrolysis GC/MS), etc. to measure the intensities of signals that represent the (meth)acrylate monomer having a hydroxyl group, which are then used for calculation. In particular, after confirming the existence of a (meth)acrylate monomer having a hydroxyl group by pyrolysis GC/MS, ¹³C-NMR (the organic resin components and an appropriate quantity of a solvent (deuterochloroform) are put in a solid NMR specimen tube, left to stand overnight, and subjected to DD/MAS analysis for measurement) is performed to determine the content of the (meth)acrylate monomer having a hydroxyl group.

The copolymer including a fluorine-containing (meth)acrylate monomer and a (meth)acrylate monomer having a hydroxyl group further includes a monomer having two or more reactive groups in a molecule. If a monomer having two or more reactive groups in a molecule is contained, it serves to obtain polymer particles that undergo reduced swelling into the electrolyte, have high electrolyte resistance, and achieve stronger adhesion to electrodes and stronger adhesion to electrodes in the electrolyte. A "polymer formed from a monomer having two or more reactive groups in a molecule" means a homopolymer formed from a monomer having two or more reactive groups in a molecule or a copolymer including a monomer having two or more reactive groups in a molecule.

The monomer having two or more reactive groups in a molecule preferably accounts for 1 mass% or more and 10 mass% or less of the entire particles A, which account for 100 mass%. The content is more preferably 3 mass% or more, still more preferably 5 mass% or more, and particularly preferably 6 mass% or more. On the other hand, it is more preferably 9 mass% or less, and more preferably 8 mass% or less. If the monomer having two or more reactive groups in a molecule accounts for 1 mass% or less, it serves to obtain sufficient adhesion to electrodes and suppress excessive swelling into the electrolyte to ensure better battery characteristics. In addition, suppression of swelling into the electrolyte serves to increase the electrolyte resistance and also realize stronger adhesion to electrodes in the electrolyte. Furthermore, if it is 10 mass% or less, it serves to provide polymer particles with high stability.

As the polymer from a monomer having two or more reactive groups in a molecule, it may be useful to adopt a monomer that can form a crosslinked structure during polymerization. As the monomer having two or more reactive groups in a molecule, it is preferable in particular to use a (meth)acrylate monomer having two or more reactive groups in a molecule, more preferably alkylene glycol di(meth)acrylate or urethane di(meth)acrylate.

More specifically, examples of the monomer having two or more reactive groups in a molecule include a monofunctional monomer having a thermally crosslinkable group and one or more olefinic double bonds in a molecule and a polyfunctional monomer having two or more olefinic double bonds in a molecule. Either only one olefinic double bond or two or more olefinic double bonds may be contained in a molecule. Examples of the thermally crosslinkable group include epoxy group, N-methylolamide group, oxetanyl group, oxazoline group, and combinations thereof.

Examples of a monofunctional monomer having an epoxy group, which is a thermally crosslinkable group, and one or more olefinic double bonds in a molecule include unsaturated glycidyl ethers such as vinyl glycidyl ether, allyl glycidyl ether, butenyl glycidyl ether, and o-allyl phenyl glycidyl ether; diene type or polyene type monoepoxides such as butadiene monoepoxide, chloroprene monoepoxide, 4,5-epoxy-2-pentene, 3,4-epoxy-1-vinyl cyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl esters of 3-cyclohexenecarboxylic acids, and glycidyl esters of 4-methyl-3-cyclohexenecarboxylic acids.

Examples of a monofunctional monomer having an N-methylolamide group, which is a thermally crosslinkable group, and one or more olefinic double bonds in a molecule include a (meth)acrylamide having a methylol group such as N-methylol(meth)acrylamide.

Examples of a monofunctional monomer having an oxetanyl group, which is a thermally crosslinkable group, and one or more olefinic double bonds in a molecule include 3-((meth)acryloyloxymethyl)oxethane, 3-((meth)acryloyloxymethyl)-2-trifluoromethyloxethane, 3-((meth)acryloyloxymethyl)-2-phenyloxethane, 2-((meth)acryloyloxymethyl)oxethane, and 2-((meth)acryloyloxymethyl)-4-trifluoromethyloxethane.

Examples of a monofunctional monomers having an oxazoline group, which is a thermally crosslinkable group, and one or more olefinic double bonds in a molecule include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Examples of a polyfunctional monomer having two or more olefinic double bonds in a molecule include allyl(meth)acrylate, ethylene di(meth)acrylate, diethylene glycol di(meth)acrylate, triethylene glycol di(meth)acrylate, tetraethylene glycol di(meth)acrylate, trimethylolpropane tri(meth)acrylate, dipropylene glycol diallyl ether, polyglycol diallyl ether, triethylene glycol divinyl ether, hydroquinone diallyl ether, tetraallyloxy ethane, trimethylolpropane-diallyl ether, allyl or vinyl ethers of other polyfunctional alcohols than those described above, triallyl amine, methylene bisacrylamide, divinylbenzene, alkylene glycol di(meth)acrylate, and urethane di(meth)acrylate.

The monomer having two or more reactive groups in a molecule is preferably such that a homopolymer formed from the monomer has a glass transition temperature of -50°C or more and 0°C or less. It is more preferably -45°C or more and 0°C or less.

For the present invention, the mixture including a polymer formed from a fluorine-containing (meth)acrylate monomer and a (meth)acrylate monomer having a hydroxyl group may further include a monomer selected appropriately from a group of specific monomers. Furthermore, the copolymer including a fluorine-containing (meth)acrylate monomer and a (meth)acrylate monomer having a hydroxyl group may be a copolymer that includes a monomer selected appropriately from the group of specific monomers. If it is a copolymer including a monomer selected appropriately from the group of specific monomers, it serves to adjust the surface free energy and glass transition temperature of the particles A in a required range.

They may have a core-shell structure consisting of a core of a polymer formed from a monomer selected appropriately from the group of specific monomers that is surrounded by a shell of a mixture including a polymer formed from a fluorine-containing (meth)acrylate monomer and a polymer formed from a (meth)acrylate monomer having a hydroxyl group or a copolymer formed from a fluorine-containing (meth)acrylate monomer and a (meth)acrylate monomer having a hydroxyl group. In the core-shell structure referred to in the present Description, the shell may completely cover the core, or the shell may partly cover the core to permit the coexistence of the core and the shell.

Monomers that can constitute the group of specific monomers include unsaturated carboxylic acid monomers, (meth)acrylate monomers, styrene based monomers, olefin based monomers, diene based monomers, and amide based monomers.

Examples of monomers used to constitute the group of specific monomers include unsaturated carboxylic acids such as acrylic acid, methacrylic acid, and crotonic acid; acrylates such as methyl acrylate, ethyl acrylate, n-propyl acrylate, isopropyl acrylate, n-butyl acrylate, isobutyl acrylate, t-butyl acrylate, pentyl acrylate, neopentyl acrylate, isoamyl acrylate, hexyl acrylate, heptyl acrylate, octyl acrylate, 2-ethylhexyl acrylate, nonyl acrylate, decyl acrylate, lauryl acrylate, dodecyl acrylate, 2-dimethylaminoethyl acrylate, 2-diethylaminoethyl acrylate, 2-dipropylaminoethyl acrylate, 2-diphenylaminoethyl acrylate, 3-(N,N-dimethylamino)propyl acrylate, n-tetradecyl acrylate, stearyl acrylate, cyclohexyl acrylate, hydroxyethyl acrylate, benzyl acrylate, isobornyl acrylate, dicyclopentanyl acrylate, and dicyclopentenyl acrylate; and methacrylates such as methyl methacrylate, ethyl methacrylate, n-propyl methacrylate, isopropyl methacrylate, n-butyl methacrylate, t-butyl methacrylate, isobutyl methacrylate, t-butylcyclohexyl methacrylate, pentyl methacrylate, neopentyl methacrylate, isoamyl methacrylate, hexyl methacrylate, heptyl methacrylate, octyl methacrylate, 2-ethylhexyl methacrylate, nonyl methacrylate, decyl methacrylate, lauryl methacrylate, dodecyl methacrylate, 2-dimethylaminoethyl methacrylate, 2-diethylaminoethyl methacrylate, 2-dipropylaminoethyl methacrylate, 2-diphenylaminoethyl methacrylate, 3-(N,N-dimethylamino)propyl methacrylate, n-tetradecyl methacrylate, stearyl methacrylate, cyclohexyl methacrylate, hydroxyethyl methacrylate, benzyl methacrylate, isobornyl methacrylate, dicyclopentanyl methacrylate, and dicyclopentenyl methacrylate. More preferable ones include isobornyl (meth)acrylate, dicyclopentanyl (meth)acrylate, dicyclopentenyl (meth)acrylate, cyclohexyl (meth)acrylate, benzyl (meth)acrylate, methyl (meth)acrylate, and n-butyl (meth)acrylate. These monomers that constitute the group of specific monomers may be used singly or two or more thereof may be used in combination at an appropriate ratio.

In the particles A, the monomers selected from the group of specific monomers preferably account for 20 mass% or more, more preferably 30 mass% or more, still more preferably 40 mass% or more, and most preferably 50 mass% or more of all components of the particles A, which account for 100 mass%. On the other hand, they preferably account for 80 mass% or less. The content is more preferably 75 mass% or less, still more preferably more and 70 mass% or less, and most preferably 65 mass% or less. If the specific monomers contained in the particles A account for 20 mass% or more, it serves to ensure sufficient adhesion to electrodes. On the other hand, if the content is 80 mass% or less, it serves to suppress swelling into the electrolyte to ensure better battery characteristics and stronger adhesion to electrodes in the electrolyte.

Of the specific monomers, at least one of the (meth)acrylate monomers is preferably one having a monocyclic hydrocarbon group or one substituted by one or more alkyl groups in order to reduce fusion bonding of particles during preparation of the particles A. Thus, the copolymer including a fluorine-containing (meth)acrylate monomer and a (meth)acrylate monomer having a hydroxyl group may further include a (meth)acrylate monomer having a monocyclic hydrocarbon group or a (meth)acrylate monomer substituted by one or more alkyl groups. The use of a (meth)acrylate monomer having a monocyclic hydrocarbon group is still more preferable because fusion bonding of particles will be reduced considerably.

In the particles A, the (meth)acrylate monomer having a monocyclic hydrocarbon group preferably accounts for more 20 mass% or more, more preferably 30 mass% or more, still more preferably 40 mass% or more, and most preferably 50 mass% or more of all components of the particles A, which account for 100 mass%. On the other hand, the content is preferably 80 mass% or less, more preferably 75 mass% or less, still 70 mass% or less, and most preferably 65 mass% or less. If the (meth)acrylate monomer having a monocyclic hydrocarbon group contained in the particles A accounts for more 20 mass% or more, it serves to ensure sufficient adhesion to electrodes. On the other hand, if the content is 80 mass% or less, it serves to suppress swelling into the electrolyte to ensure better battery characteristics and stronger adhesion to electrodes in the electrolyte.

In addition, styrene based monomers such as styrene, α-methyl styrene, p-methyl styrene, t-butyl styrene, chlorostyrene, chloromethyl styrene, and hydroxymethyl styrene; olefin based monomers such as ethylene and propylene; diene based monomers such as butadiene and isoprene; and amide based monomers such as acrylamide may be included in the copolymer contained in the particles A with the aim of adjusting the glass transition temperature in an appropriate temperature range or increasing the chemical resistance to straight chain carbonates contained in nonaqueous electrolytes present in secondary batteries. These may be used singly or two or more thereof may be combined at a desired ratio.

There are no specific limitations on the polymerization methods to adopt for producing a homopolymer of a fluorine-containing (meth)acrylate monomer, a homopolymer of a (meth)acrylate monomer having a hydroxyl group, and a copolymer of a fluorine-containing (meth)acrylate monomer and a (meth)acrylate monomer having a hydroxyl group to be used to form the particles A, and various methods such as solution polymerization, suspension polymerization, bulk polymerization, and emulsion polymerization can be useful. Useful polymerization techniques include, for example, ion polymerization, radical polymerization, and living radical polymerization. Through these polymerization processes, an aqueous solution containing a aqueous solvent and particles A dispersed therein is obtained. An aqueous solution thus prepared may be used as-obtained or the particles A may be used after separating them from the aqueous solution. The organic resin preferably contains a monomer appropriately selected from the group of specific monomers and the use of a copolymer of such monomers serves to suppress swelling into the electrolyte and increase the adhesive strength.

Useful emulsifiers to be added in the polymerization process include cationic surface active agents, anionic surface active agents, nonionic surface active agents, and amphoteric surface active agents. These may be used singly or two or more thereof may be used in combination.

Examples of the cationic surface active agents include alkylpyridinium chloride, alkyltrimethyl ammonium chloride, dialkyldimethyl ammonium chloride, and alkyldimethylbenzyl ammonium chloride.

Examples of the anionic surface active agents include sodium alkyl sulfate, sodium alkylbenzene sulfonate, sodium dialkylsuccinate sulfonate, sodium alkyl diphenyl ether disulfonate, sodium polyoxyethylene alkyl ether sulfate, and sodium polyoxyethylene alkyl phenyl ether sulfate. In particular, sodium lauryl sulfate, sodium dodecylbenzene sulfonate, sodium polyoxyethylene alkyl ether sulfate, sodium lauryl sulfate, etc., are preferable.

Examples of the nonionic surface active agents include polyoxyethylene alkyl ether, polyoxyethylene alkylaryl ether, polyoxyethylene fatty acid ester, and polyoxyethylene sorbitan fatty acid ester. In general, polyoxyethylene nonylphenyl ether, polyoxyethylene octylphenyl ether, etc., are used.

Examples of the amphoteric surface active agents include lauryl betaine, sodium hydroxyethyl imidazoline sulfate, and sodium imidazoline sulfonate.

In addition, useful emulsifiers also include fluorine based surface active agents such as perfluoroalkyl carboxylate, perfluoroalkyl sulfonate, perfluoroalkyl phosphate, perfluoroalkyl polyoxyethylene, perfluoroalkyl betaine, and ammonium perfluoroalkoxyfluorocarboxylate.

Furthermore, so-called reactive emulsifiers that can copolymerize with fluorine-containing (meth)acrylate monomers including, for example, sodium styrenesulfonate, sodium allyl alkyl sulfonate, polyoxyethylene alkyl allyl phenyl ether ammonium sulfate, and polyoxyethylene alkyl allyl phenyl ether can be used, and in particular, it is preferable to use them in combination with ammonium 2-(1-allyl)-4-nonylphenoxypolyethylene glycol sulfate and 2-(1-allyl)-4-nonylphenoxypolyethylene glycol.

In regard to the quantity of these emulsifiers, they preferably account for 0.05 part by mass or more and 10 parts by mass or less relative to the total quantity, which accounts for 100 parts by mass, of the monomer mixture that includes a fluorine-containing (meth)acrylate monomer and a (meth)acrylate monomer having a hydroxyl group.

Useful polymerization initiators include water-soluble polymerization initiators such as sodium persulfate, potassium persulfate, ammonium persulfate, and hydrogen peroxide, and also include redox polymerization initiators prepared by mixing these water-soluble polymerization initiators with reducing agents. Of these, potassium persulfate and ammonium persulfate are preferred. Useful reducing agents include, for example, sodium pyrobisulfite, sodium hydrogen sulfite, sodium sulfite, sodium thiosulfate, L-ascorbic acid, salts thereof, sodium formaldehyde sulfoxylate, ferrous sulfate, and glucose. Of these, L-ascorbic acid and salts thereof are preferred.

In regard to the quantity of these polymerization initiators, they preferably account for 0.1 part by mass or more and 3 parts by mass or less relative to the total quantity, which accounts for 100 parts by mass, of the monomer mixture that includes a fluorine-containing (meth)acrylate monomer and a (meth)acrylate monomer having a hydroxyl group.

The particles A referred to in the present Description include not only those having particle shapes, but also those partially in the form of a film fused with adjacent particles or binder. There are no specific limitations on their shapes, and actually, they may be, for example, spherical, polygonal, flattened, or fibrous.

It is preferable for the particles A to have an average particle diameter of 0.01 µm or more. It is more preferably 0.08 µm or more, still more preferably 0.1 µm or more, and most preferably 0.12 µm or more. On the other hand, it is preferably 5 µm or less, more preferably 1 µm or less, still more preferably 0.5 µm or less, and most preferably 0.3 µm or less. If the average particle diameter is 0.01 µm or more, a porous structure will be formed to ensure good battery characteristics. If it is 5 nm or less, the porous layer will have an appropriate thickness to serve for preventing a deterioration in the battery characteristics.

The average particle diameter of the particles A can be determined by the procedure described below. A field emission type scanning electron microscope (S-3400N, manufactured by Hitachi, Ltd.) is used to take an image of the surface of a porous layer at a magnification of 30,000 times and an EDX image of atoms present only in the inorganic particles in the porous layer containing both inorganic particles and organic resin particles. The image size is 4.0 µm × 3.0 µm; the number of pixels is 1,280 pixels × 1,024 pixels, and the size of a pixel is 3.1 nm × 2.9 nm. In an EDX image taken, the particles other than the inorganic ones are defined as particles A. If they cannot be distinguished by visual observation, the particles found to contain fluorine based on elemental analysis are taken as particles A. For each particle in an image taken, the smallest square or rectangle that completely surrounds the particle was drawn. That is, the edge of the particle was in contact with the four sides of the square or rectangle. For each of the particles A in the image, the length of a side of the square or the length of a longer side (or the major axis) of the rectangle was measured to represent the diameter and the arithmetic average was calculated to represent their average particle diameter. In the case where the image did not contain 50 or more observable particles A, a plurality of images of particles A were taken so that the total number of particles A contained in the plurality of images reached 50 or more, and the arithmetic average of the measurements was adopted as the average particle diameter.

From the viewpoint of their adhesion to electrodes, it is preferable for the particles A to be organic resin particles that are free of inorganic components. If the particles A are organic resin particles, stronger adhesion to electrodes is likely to be achieved.

The glass transition temperature of the particles A is preferably 10°C or more, more preferably 20°C or more, and most preferably 35°C or more. On the other hand, it is preferably 100°C or less, more preferably 80°C or less, still more preferably 70°C or less, and most preferably 60°C or less. If the glass transition temperature is 10°C or more, it serves to prevent swelling into the electrolyte to ensure good battery characteristics. If it is 100°C or less, it ensures strong adhesion to electrodes. To adjust the glass transition temperature in an appropriate range, suitable monomers may be selected from a group of specific monomers.

### (Particles B)

For the present invention, it is preferable for the porous layer to contain particles B. The particles B are inorganic particles, and if the porous layer contains inorganic particles, they serve to realize thermal dimensional stability and prevent short circuits from being caused by foreign objects.

Specific examples of the inorganic particles include particles of inorganic oxides such as aluminum oxide, boehmite, silica, titanium oxide, zirconium oxide, iron oxide, and magnesium oxide; particles of inorganic nitrides such as aluminum nitride and silicon nitride; and particles of insoluble ionic crystals such as calcium fluoride, barium fluoride, and barium sulfate. Of the various useful materials for the particles B, aluminum oxide is preferred because it serves to increase the strength, and boehmite and barium sulfate are particularly preferred because they serve to prevent abrasion of parts during the particles A and particles B dispersion step. Furthermore, these materials for the particles B may be used singly, or two or more thereof may be used as a mixture.

The inorganic particles to be used preferably have an average particle diameter of 0.05 µm or more. It is more preferably 0.10 µm or more, and still more preferably 0.20 µm or more. On the other hand, it is preferably 5.0 µm or less. It is more preferably 3.0 µm or less, still more preferably 1.0 µm or less, and particularly preferably 0.6 µm or less. If it is 0.05 µm or more, it serves to prevent an increase in air permeability to ensure good battery characteristics. Furthermore, the pore size will be smaller and accordingly the electrolyte impregnating property will be lower in some cases, possibly having an influence on the productivity. If it is 5.0 µm or less, it serves not only to achieve sufficiently high thermal dimensional stability, but also to allow the porous layer to have an appropriate thickness, serving to prevent a deterioration in the battery characteristics.

Here, the average particle diameter of the particles B was determined by the procedure described below. A field emission type scanning electron microscope (S-3400N, manufactured by Hitachi, Ltd.) was used to take an image of the surface of a porous layer at a magnification of 30,000 times and an EDX image of atoms present only in the particles B (inorganic particles) in the porous layer that contained both inorganic particles and organic resin particles. The image had a size of 4.0 µm × 3.0 µm. Here, the number of pixels was 1,280 pixels × 1,024 pixels, and the size of a pixel was 3.1 nm × 2.9 nm. Then, for each of the particle B (inorganic particle) identified in an EDX image taken, the smallest square or rectangle that completely surrounded the particle was drawn. That is, the edge of the particle was in contact with the four sides of the square or rectangle. For all particles B in the image, the length of a side of the square or the length of a longer side (or the major axis) of the rectangle was measured to represent the diameter and the arithmetic average was calculated to represent their average particle diameter. In the case where the photograph image did not contain 50 or more observable particles, a plurality of images of particles B were taken so that the total number of particles B contained in the plurality of images reached 50 or more, and the arithmetic average of the measurements was adopted as the average particle diameter.

The particles B to be used may have any appropriate shape such as spherical, plate-like, needle-like, rod-like, and elliptic. In particular, it is preferable for them to be spherical from the viewpoint of surface modification, dispersibility, and coatability.

### (Binder)

The porous layer according to the present invention may contain a binder for allowing the particles A and the particles B present in the porous layer to come in close contact with each other and also for allowing these particles to come in close contact with the porous base. It is preferable for the binder to be a resin that is electrochemically stable under the conditions where the battery is used. Examples of the binder include binders soluble in organic solvents, water-soluble binders, and emulsion type binders, and they may be used singly or in combination.

In the case of using a binder soluble in an organic solvent or soluble in water, it is preferable for the binder itself to have a viscosity of 10,000 mPa•s or less when the concentration is 15 mass%. It is more preferably 8,000 mPa•s or less, and still more preferably 5,000 mPa•s or less. If it is 10,000 mPa•s or less at a concentration of 15 mass%, it serves to prevent an increase in the viscosity of the coating material and allow the particles A to be localized near the surface to improve the adhesion to electrodes.

In the case of using an emulsion type binder, furthermore, useful dispersing agents include water and organic solvents including alcohol based solvents such as ethanol and ketone based solvents such as acetone, of which the use of a water-dispersed one is preferred from the viewpoint of handleability and miscibility with other components. The emulsion type binder should have a particle diameter of 30 to 1,000 nm, preferably 50 to 500 nm, more preferably 70 to 400 nm, and still more preferably 80 to 300 nm. If the emulsion type binder in use has a particle diameter of 30 nm or more, it serves to prevent an increase in air permeability to ensure good battery characteristics. If it is 1,000 nm or less, on the other hand, adequate contact will be realized between the porous layer and the porous base.

Resins that can be used as binder include, for example, polyamide, polyamide-imide, polyimide, polyetherimide, polyvinylidene fluoride, vinylidene fluoride-hexafluoropropylene copolymer, polytetrafluoroethylene, polysulfone, polyketone, polyether ketone, polycarbonate, polyacetal, polyvinyl alcohol, polyethylene glycol, cellulose ether, acrylic resins, polyethylene, polypropylene, polystyrene, and polyurethane. Of these, the use of acrylic resin is particularly preferable because its interaction with the particles A acts to develop stronger contact. It is also particularly preferable to use polyvinylidene fluoride or vinylidene fluoride-hexafluoropropylene copolymer (hereinafter occasionally referred to as polyvinylidene fluoride based resin) because it acts to further increase the adhesion to electrodes in the electrolyte. These resins may be used singly or may also be used as a mixture of two or more thereof.

Furthermore, in the polyvinylidene fluoride based resin, vinylidene fluoride preferably accounts for 80 mass% or more and less than 100 mass% of the components constituting the resin. The content is more preferably 85 mass% or more and 99 mass% or less. It is still more preferably 90 mass% or more and 98 mass% or less. If the content of vinylidene fluoride is less than 80 mass%, adequate dynamic strength may not be achieved in some cases. Accordingly, even if some degree of adhesion to electrodes develops, it may not be sufficiently large and lead to easy peeling. Furthermore, if the vinylidene fluoride content is 100 mass%, the electrolyte resistance will decrease, making it impossible in some cases to develop adequate adhesion.

When using a water-soluble binder, its content is preferably 0.5 mass% or more of the total mass of the particles A and particles B. It is more preferably 1 mass% or more, and more preferably 1.5 mass% or more. On the other hand, it preferably accounts for 10 mass% or less. It is more preferably 8 mass% or less, and still more preferably 6 mass% or less. If the content of the water-soluble binder added is 0.5 mass% or more, adequate contact will be realized between the porous layer and the porous base. If it is 10 mass% or less, on the other hand, it serves to prevent an increase in air permeability to ensure good battery characteristics.

When using an emulsion type binder, its content is preferably 1 mass% or more of the total mass of the particles A and particles B. It is more preferably 5 mass% or more, still more preferably 7.5 mass% or more, and most preferably 10 mass% or more. On the other hand, it is preferably 30 mass% or less, more preferably 25 mass% or less, and still more preferably 20 mass% or less. If the content of the emulsion type binder is 1 mass% or more, adequate contact will be realized between the porous layer and the porous base. If it is 30 mass% or less, on the other hand, it serves to prevent an increase in air permeability to ensure good battery characteristics. In particular, if it is 7.5 mass% or more and 20 mass% or less, it serves not only to enhance the contact between the particles A and the particles B and the contact between these particles and the base, but also to ensure increased interaction with the particles A, leading to stronger adhesion to electrodes and stronger adhesion to electrodes in the electrolyte.

### (Formation of porous layer)

The porous film according to the present invention is a porous film including a porous base and a porous layer containing particles A disposed at least on one side thereof, wherein the particles A contain a mixture including a polymer formed from a fluorine-containing (meth)acrylate monomer and a polymer formed from a (meth)acrylate monomer having a hydroxyl group or a copolymer including a fluorine-containing (meth)acrylate monomer and a (meth)acrylate monomer having a hydroxyl group, with the (meth)acrylate monomer having a hydroxyl group accounting for 2 mass% or more and 30 mass% or less of all components of the particles A, which account for 100 mass%. Such a porous film can provide a low cost porous film that develops a high thermal dimensional stability and strong adhesion to electrodes and also has excellent battery characteristics. A method for producing its porous layer is described below.

The porous layer contains the particles A and may contain the particles B appropriately. In the porous layer, the particles A preferably accounts for 2 mass% or more of all components of the porous layer, which account for 100 mass%. On the other hand, the content is preferably 30 or less. It is more preferable for the particles A to account for 4 mass% or more. On the other hand, it is more preferably 20 mass% or less, and more preferably 6 mass% or more and 15 mass% or less. If the particles A in the porous layer account for 2 mass% or more, it serves to ensure sufficient adhesion to electrodes. On the other hand, if the particles A in the porous layer account for 30 mass% or less, it serves to ensure sufficiently high thermal dimensional stability. The content of the particles A in a porous layer can be measured using generally known methods. For example, the porous layer is first removed from the porous film using an organic solvent such as water and alcohol, and the organic solvent such as water and alcohol is evaporated sufficiently by drying to separate the components present in the porous layer. After measuring the total mass of the resulting components, an organic solvent that can dissolve the organic resin components is added to the resulting components so that only the organic resin components are dissolved. Following this, the organic solvent is evaporated from the solution containing the dissolved organic resin components to extract only the organic resin components. The resulting organic resin components are analyzed by magnetic nuclear resonance (¹H-NMR, ¹⁹F-NMR), infrared absorption spectroscopy (IR), X-ray photoelectron spectroscopy (XPS), X-ray fluorescence analysis (EDX), gas chromatography mass spectrometry, matrix-assisted laser desorption ionization time-of-flight mass spectrometry (MALDI-TOF-MS), elemental analysis, etc. to determine the mass of the particles A alone. The content of the particles A in the porous layer can be calculated by the following formula: (mass of particles A / total mass of components) × 100.

In the porous layer, the particles B preferably account for 60 mass% or more of all components of the porous layer, which account for 100 mass%. The content is more preferably 65 mass% or more, still more preferably 70 mass% or more, and most preferably 75 mass% or more. On the other hand, it is preferably 95 mass% or less, more preferably 90 mass% or less, and still more preferably 85 mass% or less. If the particles B in the porous layer account for 60 mass% or more, it serves to ensure sufficiently high thermal dimensional stability. On the other hand, if the particles B in the porous layer account for 95 mass% or less, it ensures a sufficient content of the particles A, leading to good adhesion to electrodes. The content of the particles B in the porous layer can be measured using generally known methods. For example, the porous layer is first removed from the porous film using an organic solvent such as water and alcohol, and the organic solvent such as water and alcohol is evaporated sufficiently by drying to separate the components present in the porous layer. After measuring the total mass of the separated components, the components are combusted at a temperature high enough to melt and decompose the organic resin components, followed by determining the mass of only the particles B, i.e. the inorganic component. The content of the particles B in the porous layer can be calculated by the following formula: (mass of particles B / total mass of components) × 100.

The porous layer may contain fluorine-free organic particles C. Specifically, such organic particles C may be added to act as an electrode contact assistant or substrate contact assistant. If the organic particles C are added, they are likely to interact with the particles A and partly localize near the surface, possibly leading to improved adhesion between the porous layer and electrodes. Furthermore, its existence at the interface between the porous layer and the porous base can serve to improve the contact of the base in some cases. The resin that is present in the organic particles C is a fluorine-free resin, and examples thereof include acrylic resin, polyethylene, polypropylene, polystyrene, and polyurethane. From the viewpoint of the contact with electrodes and contact with the porous base, it is preferable to use acrylic resin, polyethylene, or polypropylene. Furthermore, it is preferable for the organic particles C to have a melting point of 10°C or more. It is more preferably 20°C or more, still more preferably 30°C or more, and most preferably 40°C or more. On the other hand, it is preferably 100°C or less. It is more preferably 90°C or less, still more preferably 80°C or less, and most preferably 70°C or less. If the melting point is 10°C or more, it serves to suppress the swelling in the electrolyte to ensure good battery characteristics. If it is 100°C or less, on the other hand, sufficient contact with electrodes is ensured and good contact with the porous base is also ensured.

The organic particles C added preferably account for 0.1 mass% or more of the total mass of the particles A and particles B. The content is more preferably 0.3 mass% or more, still more preferably 0.5 mass% or more, and most preferably 1.0 mass% or more. On the other hand, the content is preferably 30 mass% or less, more preferably 25 mass% or less, still more preferably 20 mass% or less, still more preferably 10 mass% or less, particularly preferably 5 mass% or less, and most preferably 3 mass% or less. If the content of the organic particles C is 0.1 mass% or more, adequate contact with electrodes is ensured and sufficient contact between the porous layer and the porous base is also ensured. If it is 10 mass% or less, on the other hand, it serves to prevent an increase in air permeability to ensure good battery characteristics.

It is preferable for the organic particles C to have a particle diameter of 10 nm or more. It is more preferably 30 µm or more, still more preferably 50 µm or more, and most preferably 80 µm or more. On the other hand, the content is preferably 500 µm or less, more preferably 400 µm or less, still more preferably 300 µm or less, still more preferably 250 µm or less, particularly preferably 200 µm or less, and most preferably 150 µm or less. If the organic particles C have a particle diameter of 10 nm or more, it serves to prevent an increase in air permeability to ensure good battery characteristics. If it is 500 nm or less, on the other hand, they will localize near the surface, possibly leading to sufficient adhesion.

The organic particles C referred to in the present Description include not only those having particle shapes, but also those partially in the form of film fused with adjacent particles or binder. There are no specific limitations on their shapes, and actually, they may be, for example, spherical, polygonal, flattened, or fibrous.

The particles A and the particles B adopted to form the porous layer are dispersed at appropriate concentrations to prepare an aqueous dispersion coating liquid. The aqueous dispersion coating liquid is prepared by dispersing the particles A and the particles B in a solvent. The solvent to be used for preparing an aqueous dispersion coating liquid contains at least water, and a solvent other than water may be added. There are no specific limitations on such a solvent other than water as long as it does not dissolve the particles A or the particles B and can disperse them in solid states. Examples include organic solvents such as methanol, ethanol, 2-propanol, acetone, tetrahydrofuran, methyl ethyl ketone, ethyl acetate, N-methylpyrrolidone, dimethyl acetamide, dimethyl formamide, and dimethyl formamide. From the viewpoint of low environmental load as well as safety and economic features, it is preferable to use water or a liquid mixture of water and alcohol.

Furthermore, the coating liquid may contain a binder, film formation assistant, dispersing agent, viscosity improver, stabilization agent, antifoam agent, leveling agent, electrode adhesion assistant, etc., as required. The addition of a film formation assistant is intended to adjust the film forming property of the particles A and ensure improved contact with the porous base, and specific examples thereof include propylene glycol, diethylene glycol, ethylene glycol, butyl cellosolve acetate, butyl cellosolve, cellosolve acetate, and Texanol. Such film formation assistants may be used singly or may be used as a mixture of two or more thereof. It is preferable for the content of these film formation assistants to be 0.1 mass% or more and 10 mass% or less, more preferably 1 mass% or more and 8 mass% or less, and still more preferably 2 mass% or more and 6 mass% or less, relative to the total quantity of the coating liquid. A content of 0.1 mass% or more ensures sufficient film formation property whereas a content of 10 mass% or less serves to prevent the porous base from being impregnated with the coating liquid during the coating of the porous base with the coating liquid, thereby improving the productivity.

Generally known methods can be used to achieve dispersion in the coating liquid. Examples include the use of a ball mill, bead mill, sand mill, roll mill, homogenizer, ultrasonic homogenizer, high pressure homogenizer, ultrasonic apparatus, and paint shaker. Its dispersion may be carried out in several stages using a plurality of these mixing and dispersing devices in combination.

Then, a porous base is coated with the resulting coating liquid, dried, and combined with a porous layer. The coating may be achieved by a generally known method. Useful examples include dip coating, gravure coating, slit die coating, knife coating, comma coating, kiss coating, roll coating, bar coating, spray coating, immersion coating, spin coating, screen printing, ink jet printing, pad printing, and other printing techniques. The coating is not limited to these methods, and an appropriate one may be selected to meet preferred conditions relating to the particles A, particles B, binder, dispersing agent, leveling agent, solvent, base material, etc. that are to be used. To increase the coatability, furthermore, the surface of the porous base to be coated may be subjected to surface treatment such as, for example, corona treatment and plasma treatment. A porous layer can work effectively if it is provided on at least either side of the porous base, but it is preferable to provide porous layers on both sides to develop good adhesion to electrodes.

To form a porous layer, furthermore, the particles B may be spread first to form a heat resistant layer, followed by spreading the particles A to form an adhesion layer. However, such multi-stage coating will require large cost, and both surfaces of the porous layer will be entirely covered with the particles A, possibly leading to blocking between adhesion layers. In addition, it will likely be difficult to extract it from a rolled up core during the production of a secondary battery. Furthermore, it will be necessary to add a binder in a large amount to achieve close contact among the particles B and between the particles B and the porous base, possibly leading to deterioration in battery characteristics. In comparison with this, if the particles A and the particles B are mixed first so that a porous layer can be formed by spreading only one coating liquid, it serves not only to reduce the required cost, but to increase the blocking resistance and easiness of its extraction as a result of the existence of both the particles A and the particles B on the surface of the porous layer. If the particles A can perform a binding function, furthermore, it serves to decrease the amount of the binder additive, leading to good battery characteristics. These facts suggest that the porous layer is formed preferably using one coating liquid prepared in advance by mixing the particles A and the particles B.

The porous layer preferably has a thickness of 1.0 µm or more. It is more preferably more than 1.0 µm, still more preferably 2.0 µm or more, still more preferably 2.5 µm or more, and most preferably 4.0 µm or more. On the other hand, it is preferably 10.0 µm or less. It is more preferably 8.0 µm or less, still more preferably 7.0 µm or less, still more preferably 6.0 µm or less, and particularly preferably 5.0 µm or less. The thickness of the porous layer referred to in the case of a porous film that is composed of a porous base and a porous layer on one side thereof means the thickness of that porous layer whereas in the case of a porous film that is composed of a porous base and porous layers on both sides thereof, it means the sum of the thicknesses of the two porous layers. If the thickness of the porous layer is 1.0 µm or more, it ensures a sufficiently high thermal dimensional stability and strong adhesion to electrodes. If it is 10.0 µm or less, a porous structure will be developed to ensure good battery characteristics. In addition, it is also advantageous in terms of cost.

### [Porous base]

For the present invention, a porous base is a base having pores inside. Examples of useful porous bases for the present invention include porous films having pores inside, nonwoven fabrics, and porous film sheets of fibrous materials. The porous base is preferably made of a resin that has electric insulating properties, electric stability, and stability in electrolytes. To develop a shutdown function, the resin to be used is preferably a thermoplastic resin having a melting point of 200°C or less. The shutdown function referred to here works, in the event of abnormal heat generation in a lithium ion battery, in such a manner that the resin is melted by heat so that the porous structure will be clogged to halt the ion migration, thereby stopping electric discharge.

The thermoplastic resin may be, for example, a polyolefin based resin, and the porous base is preferably a polyolefin based porous base. With respect to the aforementioned polyolefin based porous base, it is more preferably a polyolefin based porous base having a melting point of 200°C or less. Specific examples of the polyolefin based resin include polyethylene, polypropylene, ethylene-propylene copolymers, and mixtures thereof, which may be in the form of, for example, a monolayer porous base containing 90 mass% or more polyethylene or a multilayered porous base containing polyethylene and polypropylene.

Useful production methods for such porous bases include a method in which a polyolefin based resin is processed into a sheet, which is then stretched to make it porous and a method in which a polyolefin based resin is dissolved in a solvent such as liquid paraffin and processed into a sheet, followed by removing the solvent to make it porous.

It is preferable for the porous base to have a thickness of 3 µm or more and 50 µm or less, and more preferably 5 µm or more and 30 µm or less. If the thickness of the porous base is 50 µm or less, it serves to prevent an increase in the internal resistance of the porous base. If the thickness of the porous base is 3 µm or more, on the other hand, it will be possible to produce a porous base and ensure good mechanical characteristics.

Here, the thickness of a porous base can be determined by observing its cross section by microscopy. In the case of a porous base interposed between porous layers, the perpendicular distance between the interfaces of the porous base with the porous layers is measured to represent the thickness of the porous base. Five samples with a size of 100 mm × 100 mm were cut out and the central region of each of the five samples was observed to take measurements, followed by calculating their average to represent the thickness of the porous base.

It is preferable for the porous base to have an air permeability of 50 seconds/100 cc or more and 1,000 seconds/100 cc or less. It is more preferably 50 seconds/100 cc or more and 500 seconds/100 cc or less. If the air permeability is 50 seconds/100 cc or more, it serves to develop sufficient mechanical characteristics. If it is 1,000 seconds/100 cc or less, on the other hand, a sufficient ion mobility is ensured to realize good battery characteristics.

### [Secondary battery]

The porous film according to the present invention can be used suitably for the separators of secondary batteries such as lithium ion battery. A lithium ion battery contains a positive electrode formed by laying a positive electrode active material on a positive electrode collector and a negative electrode formed by laying a negative electrode active material on a negative electrode collector, with a secondary battery separator and an electrolyte interposed between them.

In a positive electrode, a positive electrode material containing an active material, binder resin, and conductive assistant is laid over a collector, and useful active materials include, for example, lithium-containing transition metal oxides such as LiCoO₂, LiNiO₂, and Li(NiCoMn)O₂, having layer-like structures, spinel type manganese oxides such as LiMn₂O₄, and iron based compounds such as LiFePO₄. A highly oxidation resistant resin can serve as binder resin. Specific examples include fluorine resin, acrylic resin, and styrene-butadiene resin. Useful conductive assistants include carbon materials such as carbon black and graphite. The collector is preferably in the form of metal foil, and in particular, aluminum foil is used widely.

In a negative electrode, a negative electrode material containing an active material and binder resin is laid over a collector, and useful active materials include, for example, carbon materials such as artificial graphite, natural graphite, hard carbon, and soft carbon, lithium alloy based materials of tin, silicon, etc., metal materials such as Li, and others such as lithium titanate (Li₄Ti₅O₁₂). Useful binder resins include fluorine resin, acrylic resin, and styrene-butadiene resin. The collector is preferably in the form of metal foil, and in particular, copper foil is used widely.

The electrolyte gives a space in which ions migrate between the positive electrode and the negative electrode in a secondary battery, and it consists mainly of an electrolyte substance dissolved in an organic solvent. Examples of the electrolyte substance include LiPF₆, LiBF₄, and LiClO₄, of which LiPF₆ is preferred from the viewpoint of solubility in organic solvents and ion conductance. Examples of the organic solvent include ethylene carbonate, propylene carbonate, fluoroethylene carbonate, dimethyl carbonate, diethyl carbonate, and ethylmethyl carbonate, and these organic solvents may be used as a mixture of two or more thereof.

As a method to produce a secondary battery, first an active material and a conductive assistant are dispersed in a binder resin solution to prepare a coating solution for electrode formation and this coating solution is spread over a collector, followed by drying to remove the solvent. A positive electrode and negative electrode are formed in this way. After the drying step, the coating film preferably has a thickness of 50 µm or more and 500 µm or less. A secondary battery separator is sandwiched between the resulting positive electrode and negative electrode in such a manner that it comes in contact with the active material layer of each electrode and then they are enclosed in a covering material such as aluminum laminate film. Subsequently, an electrolyte is injected, and a negative electrode lead and safety valves are attached, followed by sealing the covering material. The secondary battery thus obtained enjoys strong adhesion between the electrodes and the secondary battery separator and good battery characteristics and can be produced at low cost.

### EXAMPLES

The present invention is explained more specifically below with reference to examples, though the invention is not limited thereto. The measuring methods used in these examples are described below.

### [Measuring methods]

### (1) Air permeability

Measurements were taken from the central region of a sample with a size of 100 mm × 100 mm according to JIS P 8117 (2009) using an Oken type air permeability measuring device (EG01-5-1MR, manufactured by Asahi Seiko Co., Ltd.). After examining three samples as described above, the measurements taken were averaged and the average value was adopted to represent the air permeability (seconds/100 cc).

### (2) Thickness of porous layer

A sample section was prepared with a microtome and the cross section was observed under a field emission type scanning electron microscope (S-800, manufactured by Hitachi, Ltd., accelerating voltage 26 kV). The highest point above the interface with the porous base was identified and the distance between them was defined as the thickness of the porous layer. When there is only one porous layer, its thickness was adopted, whereas when there is one on each side, the total thickness was adopted. Measurements were taken from the central region of each sample with a size of 100 mm × 100 mm. After examining five samples as described above, the measurements taken were averaged.

### (3) Content of particles B (inorganic particles) in porous layer

From a 10 cm × 10 cm porous film sample, the porous layer was removed using 40 g of water, and then water and organic solvents such as alcohol were evaporated sufficiently by drying to separate the components present in the porous layer. After measuring the total mass of the separated components, the components were combusted at a temperature high enough to melt and decompose the organic resin components, followed by determining the mass of only the inorganic particles. The content by mass percent of the inorganic particles in the porous layer was calculated by the following formula: (mass of inorganic particles / total mass of components) × 100.

### (4) External appearance of coat film

A sample with a size of 100 mm × 200 mm was put on black drawing paper and its appearance was observed and evaluated according to the criteria given below.
- Coat film having excellent appearance: free of coating streaks or cissing
- Coat film having good appearance: either coating streaks or cissing observed slightly
- Coat film having fair appearance: both coating streaks and cissing observed slightly
- Coat film having poor appearance: coating streaks and cissing observed, making evaluation difficult

### (5) Thermal shrinkage (thermal dimensional stability)

Three samples, each with a size of 100 mm × 100 mm, were prepared and the distance between the center of a side and the center of the opposite side was measured in each sample, which was then heat-treated for 30 minutes in an oven at 150°C under tension-free conditions. After the heat treatment step, the sample was taken out and the distance between the same center points examined before the heat treatment step was measured, followed by calculating the thermal shrinkage by the formula given below. Measurements were taken simultaneously from two positions in each sample and the average of all measurements was calculated to represent the thermal shrinkage (thermal dimensional stability), followed by evaluating the sample as outstanding when it was less than 5%, excellent when it was 5% or more and less than 10%, good when it was 10% or more and less than 20%, fair when it was 20% or more and less than 40%, and poor when it was 40% or more. Thermal shrinkage (%) = [(center-to-center distance before heat treatment) - (center-to-center distance after heat treatment)] / (center-to-center distance before heat treatment) × 100

### (6) Adhesion to electrode evaluation 1

A 15 mm × 100 mm positive electrode containing Li(Ni_{5/10}Mn_{2/10}Co_{3/10})O₂ as active material, vinylidene fluoride resin as binder, and acetylene black and graphite as conductive assistants was placed together with a porous film in such a manner that the active material and the porous layer were in contact with each other, and they were hot-pressed in a heat roll press machine under the conditions of 0.5 MPa, 80°C, and 0.2 m/min. Then, the film was peeled off manually with tweezers and the adhesive strength was evaluated according to the five-stage criteria given below. Similarly, the adhesive strength between a negative electrode containing graphite as active material, vinylidene fluoride resin as binder, and carbon black as conductive assistant and a porous film was measured, and the measurements taken from the positive electrode and the negative electrode were summed up and averaged to represent the adhesive strength to be used for evaluation.
- Outstanding adhesive strength: A very large force was required to peel off the electrode from the porous film.
- Excellent adhesive strength: A large force was required to peel off the electrode from the porous film.
- Good adhesive strength: A slightly large force was required to peel off the electrode from the porous film
- Fair adhesive strength: Only a weak force was required to peel off the electrode from the porous film.
- Poor adhesive strength: Only a very small force was required to peel off the electrode from the porous film.

### (7) Adhesion to electrode evaluation 2

A 20 mm × 50 mm positive electrode containing Li(Ni_{5/10}Mn_{2/10}Co_{3/10})O₂ as active material, vinylidene fluoride resin as binder, and acetylene black and graphite as conductive assistants was placed together with a 25 mm × 55 mm porous film in such a manner that the active material and the porous layer were in contact with each other, and they were hot-pressed under the conditions of 70°C, 5 MPa, 10 seconds to adhere the electrode and the porous film. Then, they were peeled off manually with tweezers and the adhesive strength was evaluated according to the five-stage criteria given below. Similarly, the adhesive strength between a negative electrode containing graphite as active material, vinylidene fluoride resin as binder, and carbon black as conductive assistant and a porous film was measured, and the measurements taken from the positive electrode and the negative electrode were summed up and averaged to represent the adhesive strength to be used for evaluation.
- Outstanding adhesive strength: A very large force was required to peel off the electrode from the porous film.
- Excellent adhesive strength: A large force was required to peel off the electrode from the porous film.
- Good adhesive strength: A slightly large force was required to peel off the electrode from the porous film.
- Fair adhesive strength: Only a small force was required to peel off the from the porous film.
- Poor adhesive strength: Only a very small force was required to peel off the electrode from the porous film.

### (8) Evaluation for adhesion to electrode in electrolyte

A 20 mm × 50 mm positive electrode containing Li(Ni_{5/10}Mn_{2/10}Co_{3/10})O₂ as active material, vinylidene fluoride resin as binder, and acetylene black and graphite as conductive assistants was placed together with a 25 mm × 55 mm porous film on an aluminum laminate pack in such a manner that the active material and the porous layer were in contact with each other. Then, 1 g of an electrolyte was added so that it was absorbed, and they were sealed using a vacuum sealer, thus preparing a test cell. Here, the electrolyte was produced by dissolving a LiPF₆ solute in a 1:1 (volume ratio) mixed solvent of ethylene carbonate and diethyl carbonate to a concentration of 1 mole/liter. Then, this test cell was hot pressed under the conditions of 60°C, 2 MPa, and 120 seconds to adhere the electrode and the porous film. Subsequently, the cell was disassembled and peeling was performed manually with tweezers, followed by making an adhesive strength evaluation according to the five-stage criteria given below. Similarly, the adhesive strength between a negative electrode containing graphite as active material, vinylidene fluoride resin as binder, and carbon black as conductive assistant and a porous film was measured, and the measurements taken from the positive electrode and the negative electrode were summed up and averaged to represent the adhesive strength to be used for evaluation.
- Outstanding adhesive strength: A very large force was required to peel off the electrode from the porous film.
- Excellent adhesive strength: A large force was required to peel off the electrode from the porous film.
- Good adhesive strength: A slightly large force was required to peel off the electrode from the porous film.
- Fair adhesive strength: Only a small force was required to peel off the from the porous film.
- Poor adhesive strength: Only a very small force was required to peel off the electrode from the porous film.

### (9) Production of battery

To produce a positive electrode sheet, 92 parts by mass of Li(Ni_{5/10}Mn_{2/10}Co_{3/10})O₂ as positive electrode active material, 2.5 parts by mass each of acetylene black and graphite as positive electrode conductive assistants, and 3 parts by mass of polyvinylidene fluoride as positive electrode binder were dispersed in N-methyl-2-pyrrolidone using a planetary mixer to prepare a positive electrode slurry, which was then spread over aluminum foil, dried, and rolled (areal coating weight 9.5 mg/cm²).

This positive electrode sheet was cut to provide a 40 mm × 40 mm sample. This step was carried out in such a manner that a 5 mm × 5 mm tab adhering portion that was intended for a collector and was free of the active material layer was protruded out of the active material face. An aluminum tab with a width of 5 mm and a thickness of 0.1 mm was attached to the tab adhering portion by ultrasonic welding.

To produce a negative electrode sheet, 98 parts by mass of natural graphite as negative electrode active material, 1 part by mass of carboxymethyl cellulose as viscosity improver, and 1 part by mass of a styrene-butadiene copolymer as negative electrode binder were dispersed in water using a planetary mixer to prepare a negative electrode slurry, which was spread over copper foil, dried, and rolled (areal coating weight 5.5 mg/cm²).

This negative electrode sheet was cut to provide a 45 mm × 45 mm sample. This step was carried out in such a manner that a 5 mm × 5 mm tab adhering portion that was intended for a collector and was free of the active material layer was protruded out of the active material face. A copper tab of the same size as the positive electrode tab was attached to the tab adhering portion by ultrasonic welding.

Then, the porous film was cut to provide a 55 mm × 55 mm sample, and the positive electrode and the negative electrode were disposed on both surfaces of the porous film such that the porous film was separated by the active material layer, and the positive electrode coated portion is entirely opposed to the negative electrode coated portion to obtain an electrode group. The aforementioned positive electrode, porous film, and negative electrode were wrapped in a 90 mm × 200 mm aluminum laminate film and the long sides of the aluminum laminate film were folded. Then, the two long sides of the aluminum laminate film were heat-sealed to form a bag.

A 1:1 (volume ratio) mixed solvent of ethylene carbonate and diethyl carbonate was prepared and a LiPF₆ solute was dissolved to a concentration of 1 mole/liter to produce an electrolyte. Then, 1.5 g of the electrolyte was put in the bag of aluminum laminate film and, while performing impregnation under reduced pressure, the short sides of the aluminum laminate film were heat-sealed to provide a laminate type battery.

### (10) Discharge load characteristics

Test for discharge load characteristics was carried out by the following procedure and an evaluation was performed based on discharge capacity retention rate measurements.

For laminate type batteries as prepared above, the discharge capacity was measured when electric discharge was performed at 25°C and 0.5 C, and the discharge capacity was also measured when electric discharge was performed at 10 C, followed by calculating the discharge capacity retention rate as (discharge capacity at 10 C) / (discharge capacity at 0.5 C) × 100. Here, electric charging was performed under constant current charging conditions at 0.5 C and 4.3 V whereas discharging was performed under constant current discharging conditions at 2.7 V. Five laminate type batteries were prepared as described above, and the one giving the maximum discharge capacity retention rate and the one giving the minimum discharge capacity retention rate were excluded, followed by calculating the average of the remaining three measurements to represent the capacity retention rate. A battery was rated as poor when the discharge capacity retention rate was less than 40%, fair when it was 40% or more and less than 45%, good when it was 45% or more and less than 50%, excellent when it was 50% or more and less than 55%, and outstanding when it was 55% or more.

### (11) Charge-discharge cycle characteristics

Test for charge-discharge cycle characteristics of laminate type batteries prepared as above was carried out by the following procedure and an evaluation was performed based on discharge capacity retention rate measurements.

### <1st to 300th cycles>

One cycle consisted of one charge step and one discharge step, and this charge-discharge cycle was repeated 300 times at 25°C under the charging condition of constant current charging at 2 C and 4.3 V and the discharging condition of constant current discharging at 2 C and 2.7 V.

### <Calculation of discharge capacity retention rate>

The discharge capacity retention rate was calculated as (discharge capacity in 300th cycle) / (discharge capacity in 1st cycle) × 100. Five laminate type batteries were prepared as described above, and the one giving the maximum discharge capacity retention rate and the one giving the minimum discharge capacity retention rate were excluded, followed by calculating the average of the remaining three measurements to represent the capacity retention rate. A battery was rated as poor for charge-discharge cycle characteristics when the discharge capacity retention rate was less than 45%, fair when it was 45% or more and less than 50%, good for charge-discharge cycle characteristics when it was 50% or more and less than 60%, excellent for charge-discharge cycle characteristics when it was 60% or more and less than 70%, and outstanding for charge-discharge cycle characteristics when it was 70% or more.

### (Example 1)

In a reaction vessel, 120 parts of ion-exchanged water and 1 part of Adeka Reasoap SR-1025 (emulsifier manufactured by Adeka Corporation) were fed and their stirring was started. After adding 0.4 part of 2,2'-azobis(2-(2-imidazoline-2-yl)propane) (manufactured by Wako Pure Chemical Industries, Ltd.) thereto in a nitrogen atmosphere, a monomer mixture consisting of 30 parts of 2,2,2-trifluoroethyl methacrylate (3FMA), 57 parts of cyclohexyl acrylate (CHA), 6 parts of 4-hydroxybutyl acrylate (4HBA, homopolymer, Tg -80°C), 7 parts of polyalkylene glycol dimethacrylate PDE-600 (manufactured by NOF Corporation, Polymerization of this PDE-600 gives a homopolymer with a Tg of -34°C), 9 parts of Adeka Reasoap SR-1025 (emulsifier manufactured by Adeka Corporation), and 115 parts of ion-exchanged water was dropped continuously over 2 hours at 60°C, and the dropping step was followed by polymerization treatment performed for 4 hours to produce a dispersion liquid A containing particles A of organic copolymer resin (average particle diameter 185 nm, glass transition temperature 41°C).

After preparing alumina particles (aluminum oxide) with an average particle diameter 0.5 µm as particles B, water was added as solvent in the same quantity as the particles B, and carboxymethyl cellulose was added as dispersing agent up to 2 mass% relative to the particles B. Then, they were dispersed using a bead mill to provide a dispersion liquid B.

The dispersion liquid A and the dispersion liquid B were dispersed in water in such a manner that the particles A contained in the porous layer accounted for 13.6 mass% while the particles B accounted for 70 mass%, and they were mixed by a stirring device. In addition, an acrylic emulsion binder (acrylic particles, 100 nm) was added as binder up to 18 mass% relative to the total amount of the particles A and particles B to prepare a coating liquid.

The resulting coating liquid was spread over both surfaces of a polyethylene porous base (with a thickness of 9 µm and an air permeability of 60 seconds/100 cc) using a wire bar and dried in a hot air oven (drying temperature set at 50°C) until the solvent contained was evaporated to form a porous layer, followed by producing a porous film according to the present invention. Table 2 shows measuring results of the resulting porous film including porous layer thickness, air permeability, coat film appearance, thermal shrinkage (thermal dimensional stability), adhesion to electrode evaluation 1 and evaluation 2, adhesion to electrode in electrolyte, discharge load characteristics, and charge-discharge cycle characteristics.

### (Example 2)

Except that the porous layer had a thickness as shown in Table 2, the same procedure as in Example 1 was carried out to produce a porous film according to the present invention. Measuring results of the porous film are shown in Table 2.

### (Example 3)

Except that the contents of the particles A and the particles B in the porous layer and the content of the acrylic emulsion binder were as shown in Table 1-1, the same procedure as in Example 1 was carried out to produce a porous film according to the present invention. Measuring results of the porous film are shown in Table 2.

### (Example 4)

Except that the porous layer had a thickness as shown in Table 2, the same procedure as in Example 3 was carried out to produce a porous film according to the present invention. Measuring results of the porous film are shown in Table 2.

### (Example 5)

Except that the particles A were composed of the components shown in Table 1-1, the same procedure as in Example 1 was carried out to produce a porous film according to the present invention. Measuring results of the porous film are shown in Table 2.

### (Example 6)

Except that the porous layer had a thickness as shown in Table 2, the same procedure as in Example 5 was carried out to produce a porous film according to the present invention. Measuring results of the porous film are shown in Table 2.

### (Example 7)

Except that the particles A were composed of the components shown in Table 1-1, the same procedure as in Example 1 was carried out to produce a porous film according to the present invention. Measuring results of the porous film are shown in Table 2.

### (Example 8)

Except that the porous layer had a thickness as shown in Table 2, the same procedure as in Example 7 was carried out to produce a porous film according to the present invention. Measuring results of the porous film are shown in Table 2.

### (Example 9)

Except that the contents of the particles A and the particles B in the porous layer and the content of the acrylic emulsion binder were as shown in Table 1-1, the same procedure as in Example 7 was carried out to produce a porous film according to the present invention. Measuring results of the porous film are shown in Table 2.

### (Example 10)

Except that the porous layer had a thickness as shown in Table 2, the same procedure as in Example 9 was carried out to produce a porous film according to the present invention. Measuring results of the porous film are shown in Table 2.

### (Example 11)

Except that the contents of the particles A and the particles B in the porous layer and the content of the acrylic emulsion binder were as shown in Table 1-2, the same procedure as in Example 7 was carried out to produce a porous film according to the present invention. Measuring results of the porous film are shown in Table 2.

### (Example 12)

Except that the porous layer had a thickness as shown in Table 2, the same procedure as in Example 11 was carried out to produce a porous film according to the present invention. Measuring results of the porous film are shown in Table 2.

### (Example 13)

Except that the contents of the particles A and the particles B in the porous layer and the content of the acrylic emulsion binder were as shown in Table 1-2, the same procedure as in Example 7 was carried out to produce a porous film according to the present invention. Measuring results of the porous film are shown in Table 2.

### (Example 14)

Except that the particles A were composed of the components shown in Table 1-2, the same procedure as in Example 1 was carried out to produce a porous film according to the present invention. Measuring results of the porous film are shown in Table 2.

### (Example 15)

Except for using barium sulfate particles as the particles B, the same procedure as in Example 7 was carried out to produce a porous film according to the present invention. Measuring results of the porous film are shown in Table 2.

### (Example 16)

Except that the porous layer had a thickness as shown in Table 2, the same procedure as in Example 15 was carried out to produce a porous film according to the present invention. Measuring results of the porous film are shown in Table 2.

### (Example 17)

Except that the content of the particles A contained in the porous layer was changed and that organic particles C (polyethylene, melting point 80°C, average particle diameter 100 nm) were added and accounted for 1.2 mass% relative to the total quantity of the particles A and particles B, the same procedure as in Example 10 was carried out to produce a porous film according to the present invention. Measuring results of the porous film are shown in Table 2.

### (Example 18)

Except that the content of the particles A contained in the porous layer was changed and that organic particles C (polypropylene, melting point 60°C, average particle diameter 100 nm) were added and accounted for 1.3 mass% relative to the total quantity of the particles A and particles B, the same procedure as in Example 10 was carried out to produce a porous film according to the present invention. Measuring results of the porous film are shown in Table 2.

### (Example 19)

Except that the particles A were composed of the components shown in Table 1-2, the same procedure as in Example 1 was carried out to produce a porous film according to the present invention. Measuring results of the porous film are shown in Table 2.

### (Example 20)

Except that the particles A were composed of the components shown in Table 1-2 and that the porous layer had a thickness as shown in Table 2, the same procedure as in Example 1 was carried out to produce a porous film according to the present invention. Measuring results of the porous film are shown in Table 2.

### (Example 21)

Except that the particles A were composed of the components shown in Table 1-3, the same procedure as in Example 1 was carried out to produce a porous film according to the present invention. Measuring results of the porous film are shown in Table 2.

### (Example 22)

Except that the particles A were composed of the components shown in Table 1-3 and that the porous layer had a thickness as shown in Table 2, the same procedure as in Example 1 was carried out to produce a porous film according to the present invention. Measuring results of the porous film are shown in Table 3.

### (Example 23)

Except that the particles A were composed of the components shown in Table 1-3, the same procedure as in Example 1 was carried out to produce a porous film according to the present invention. Measuring results of the porous film are shown in Table 2.

### (Example 24)

Except that the particles A were composed of the components shown in Table 1-3 and that the porous layer had a thickness as shown in Table 2, the same procedure as in Example 1 was carried out to produce a porous film according to the present invention. Measuring results of the porous film are shown in Table 2.

### (Example 25)

Except that the particles A were composed of the components shown in Table 1-3, the same procedure as in Example 1 was carried out to produce a porous film according to the present invention. Measuring results of the porous film are shown in Table 2.

### (Example 26)

Except that the particles A were composed of the components shown in Table 1-3 and that the porous layer had a thickness as shown in Table 2, the same procedure as in Example 1 was carried out to produce a porous film according to the present invention. Measuring results of the porous film are shown in Table 2.

### (Example 27)

Except that the particles A were composed of the components shown in Table 1-3, the same procedure as in Example 1 was carried out to produce a porous film according to the present invention. Measuring results of the porous film are shown in Table 2.

### (Example 28)

Except that the particles A were composed of the components shown in Table 1-3 and that the porous layer had a thickness as shown in Table 2, the same procedure as in Example 1 was carried out to produce a porous film according to the present invention. Measuring results of the porous film are shown in Table 2.

### (Example 29)

Except that the particles A were composed of the components shown in Table 1-3, the same procedure as in Example 1 was carried out to produce a porous film according to the present invention. Measuring results of the porous film are shown in Table 2.

### (Example 30)

Except that the particles A were composed of the components shown in Table 1-3, the same procedure as in Example 1 was carried out to produce a porous film according to the present invention. Measuring results of the porous film are shown in Table 2.

### (Example 31)

Except that the particles A were composed of the components shown in Table 1-4, the same procedure as in Example 1 was carried out to produce a porous film according to the present invention. Measuring results of the porous film are shown in Table 2.

### (Example 32)

Except that the particles A were composed of the components shown in Table 1-4, the same procedure as in Example 1 was carried out to produce a porous film according to the present invention. Measuring results of the porous film are shown in Table 2.

### (Example 33)

Except that the particles A were composed of the components shown in Table 1-4, the same procedure as in Example 1 was carried out to produce a porous film according to the present invention. Measuring results of the porous film are shown in Table 2.

### (Example 34)

Except that the particles A were composed of the components shown in Table 1-4, the same procedure as in Example 1 was carried out to produce a porous film according to the present invention. Measuring results of the porous film are shown in Table 2.

### (Example 35)

Except that the particles A were composed of the components shown in Table 1-4, the same procedure as in Example 1 was carried out to produce a porous film according to the present invention. Measuring results of the porous film are shown in Table 2.

### (Example 36)

Except that the particles A were composed of the components shown in Table 1-4, the same procedure as in Example 1 was carried out to produce a porous film according to the present invention. Measuring results of the porous film are shown in Table 2.

### (Example 37)

Except that the particles A were composed of the components shown in Table 1-4, the same procedure as in Example 1 was carried out to produce a porous film according to the present invention. Measuring results of the porous film are shown in Table 2.

### (Example 38)

Except that the particles A were composed of the components shown in Table 1-4, the same procedure as in Example 1 was carried out to produce a porous film according to the present invention. Measuring results of the porous film are shown in Table 2.

### (Example 39)

Except that the contents of the particles A and the particles B in the porous layer and the content of the acrylic emulsion binder were as shown in Table 1-4, the same procedure as in Example 1 was carried out to produce a porous film according to the present invention. Measuring results of the porous film are shown in Table 2.

### (Example 40)

Except that the contents of the particles A and the particles B in the porous layer and the content of the acrylic emulsion binder were as shown in Table 1-4, the same procedure as in Example 1 was carried out to produce a porous film according to the present invention. Measuring results of the porous film are shown in Table 2.

### (Example 41)

Except that the emulsion binder contained in the porous layer was a resin of a copolymer formed from vinylidene fluoride and hexafluoropropylene (polyvinylidene fluoride based resin, vinylidene fluoride content 95 mass%), the same procedure as in Example 5 was carried out to produce a porous film according to the present invention. Measuring results of the porous film are shown in Table 2.

### (Example 42)

Except that the contents of the particles A and the particles B in the porous layer and the content of the emulsion binder were as shown in Table 1-4, the same procedure as in Example 41 was carried out to produce a porous film according to the present invention. Measuring results of the porous film are shown in Table 2.

### (Example 43)

Except that the emulsion binder contained in the porous layer was a resin of a copolymer formed from vinylidene fluoride and hexafluoropropylene (polyvinylidene fluoride based resin, vinylidene fluoride content 80 mass%), the same procedure as in Example 5 was carried out to produce a porous film according to the present invention. Measuring results of the porous film are shown in Table 2.

### (Comparative example 1)

Except that the particles A were composed of the components shown in Table 1-5, the same procedure as in Example 1 was carried out to produce a porous film according to the present invention. Measuring results of the porous film are shown in Table 2.

### (Comparative example 2)

Except that a coating liquid was prepared without adding the particles A and that the content of the particles B contained in the porous layer was as shown in Table 1-5, the same procedure as in Example 1 was carried out to produce a porous film according to the present invention. Measuring results of the porous film are shown in Table 2.

### (Comparative example 3)

Except that the components shown in Table 1-5 were used for the particles A, the same procedure as in Example 1 was carried out to polymerize particles A, but it was impossible to produce stable particles A that maintain particle shapes.

It is seen from Tables that, in any of Examples 1 to 43, the resulting porous film includes a porous base and a porous layer containing particles A disposed at least on one side thereof, wherein the particles A contain a mixture including a polymer formed from a fluorine-containing (meth)acrylate monomer and a polymer formed from a (meth)acrylate monomer having a hydroxyl group or a copolymer including a fluorine-containing (meth)acrylate monomer and a (meth)acrylate monomer having a hydroxyl group, with the (meth)acrylate monomer having a hydroxyl group accounting for more than 2 mass% and 30 mass% or less of all components of the particles A, which account for 100 mass%. This ensures sufficient thermal dimensional stability, strong adhesion to the electrodes, and good battery characteristics.

On the other hand, in Comparative example 1, the (meth)acrylate monomer having a hydroxyl group accounts for 2 mass% or less, and accordingly, it is impossible to realize sufficient adhesion to electrodes. In Comparative example 2, particles A are not added, and accordingly, it is impossible to realize sufficient adhesion to electrodes. In Comparative example 3, the (meth)acrylate monomer having a hydroxyl group accounts for more than 30 mass%, and accordingly, it is impossible to produce stable particles A.

### [Table 1-1]

**Table 1-1**

| | particles A | | | | | | | | particles B | organic particles C | binder |
|---|---|---|---|---|---|---|---|---|---|---|---|
| | fluorine-containing (meth)acrylate monomer and its content (mass%) | (meth)acrylate monomer having a hydroxyl group and its content (mass%) | monomer having 2 or more reactive groups in a molecule and its content (mass%) | (meth)acrylate monomer having a monocyclic hydrocarbon group and its content (mass%) | (meth)acrylate monomer unit substituted by 1 or more alkyl groups and its content (mass%) | average particle diameter (nm) | glass transition temperature (°C) | content of particles A contained in porous layer (mass%) | type and content of particles B contained in porous layer (mass%) | type and content (mass%) | type and content (mass%) |
| Example 1 | 3FMA 30 mass% | 4HBA 6 mass% | polyalkylene glycol dimethacrylate 7 mass% | CHA 57 mass% | - | 182 | 41 | 13.6 | aluminum oxide 70 mass% | - | acrylic emulsion 18.0 mass% |
| Example 2 | 3FMA 30 mass% | 4HBA 6 mass% | polyalkylene glycol dimethacrylate 7 mass% | CHA 57 mass% | - | 182 | 41 | 13.6 | aluminum oxide 70 mass% | - | acrylic emulsion 18.0 mass% |
| Example 3 | 3FMA 30 mass% | 4HBA 6 mass% | polyalkylene glycol dimethacrylate 7 mass% | CHA 57 mass% | - | 182 | 41 | 9.9 | aluminum oxide 75 mass% | - | acrylic emulsion 16.0 mass% |
| Example 4 | 3FMA 30 mass% | 4HBA 6 mass% | polyalkylene glycol dimethacrylate 7 mass% | CHA 57 mass% | - | 182 | 41 | 9.9 | aluminum oxide 75 mass% | - | acrylic emulsion 16.0 mass% |
| Example 5 | 3FMA 30 mass% | 4HBA 10 mass% | polyalkylene glycol dimethacrylate 7 mass% | CHA 53 mass% | - | 181 | 40 | 13.6 | aluminum oxide 70 mass% | - | acrylic emulsion 18.0 mass% |
| Example 6 | 3FMA 30 mass% | 4HBA 10 mass% | polyalkylene glycol dimethacrylate 7 mass% | CHA 53 mass% | - | 181 | 40 | 13.6 | aluminum oxide 70 mass% | - | acrylic emulsion 18.0 mass% |
| Example 7 | 3FMA 30 mass% | 4HBA 14 mass% | polyalkylene glycol dimethacrylate 7 mass% | CHA 49 mass% | - | 186 | 39 | 13.6 | aluminum oxide 70 mass% | - | acrylic emulsion 18.0 mass% |
| Example 8 | 3FMA 30 mass% | 4HBA 14 mass% | polyalkylene glycol dimethacrylate 7 mass% | CHA 49 mass% | - | 186 | 39 | 13.6 | aluminum oxide 70 mass% | - | acrylic emulsion 18.0 mass% |
| Example 9 | 3FMA 30 mass% | 4HBA 14 mass% | polyalkylene glycol dimethacrylate 7 mass% | CHA 49 mass% | - | 186 | 39 | 9.9 | aluminum oxide 75 mass% | - | acrylic emulsion 16.0 mass% |
| Example 10 | 3FMA 30 mass% | 4HBA 14 mass% | polyalkylene glycol dimethacrylate 7 mass% | CHA 49 mass% | - | 186 | 39 | 9.9 | aluminum oxide 75 mass% | - | acrylic emulsion 16.0 mass% |

### [Table 1-2]

**Table 1-2**

| | particles A | | | | | | | | particles B | organic particles C | binder |
|---|---|---|---|---|---|---|---|---|---|---|---|
| | fluorine-containing (meth)acrylate monomer and its content (mass%) | (meth)acrylate monomer having a hydroxyl group and its content (mass%) | monomer having 2 or more reactive groups in a molecule and its content (mass%) | (meth)acrylate monomer having a monocyclic hydrocarbon group and its content (mass%) | (meth)acrylate monomer unit substituted by 1 or more alkyl groups and its content (mass%) | average particle diameter (nm) | glass transition temperature (°C) | content of particles A contained in porous layer (mass%) | type and content of particles B contained in porous layer (mass%) | type and content (mass%) | type and content (mass%) |
| Example 11 | 3FMA 30 mass% | 4HBA 14 mass% | polyalkylene glycol dimethacrylate 7 mass% | CHA 49 mass% | - | 186 | 39 | 5.6 | aluminum oxide 80 mass% | - | acrylic emulsion 15.0 mass% |
| Example 12 | 3FMA 30 mass% | 4HBA 14 mass% | polyalkylene glycol dimethacrylate 7 mass% | CHA 49 mass% | - | 186 | 39 | 5.6 | aluminum oxide 80 mass% | - | acrylic emulsion 15.0 mass% |
| Example 13 | 3FMA 30 mass% | 4HBA 14 mass% | polyalkylene glycol dimethacrylate 7 mass% | CHA 49 mass% | - | 186 | 39 | 0.8 | aluminum oxide 91 mass% | - | acrylic emulsion 6.9 mass% |
| Example 14 | 3FMA 24 mass% | 4HBA 14 mass% | polyalkylene glycol dimethacrylate 7 mass% | CHA 55 mass% | - | 187 | 37 | 13.6 | aluminum oxide 70 mass% | - | acrylic emulsion 18.0 mass% |
| Example 15 | 3FMA 30 mass% | 4HBA 14 mass% | polyalkylene glycol dimethacrylate 7 mass% | CHA 49 mass% | - | 186 | 39 | 13.6 | barium sulfate 70 mass% | - | acrylic emulsion 18.0 mass% |
| Example 16 | 3FMA 30 mass% | 4HBA 14 mass% | polyalkylene glycol dimethacrylate 7 mass% | CHA 49 mass% | - | 186 | 39 | 13.6 | barium sulfate 70 mass% | - | acrylic emulsion 18.0 mass% |
| Example 17 | 3FMA 30 mass% | 4HBA 14 mass% | polyalkylene glycol dimethacrylate 7 mass% | CHA 49 mass% | - | 186 | 39 | 9 | aluminum oxide 75 mass% | polyethylene 1.2 mass% | acrylic emulsion 16.1 mass% |
| Example 18 | 3FMA 30 mass% | 4HBA 14 mass% | polyalkylene glycol dimethacrylate 7 mass% | CHA 49 mass% | - | 186 | 39 | 9 | aluminum oxide 75 mass% | polypropylene 1.3 mass% | acrylic emulsion 16.0 mass% |
| Example 19 | 3FMA 24 mass% | 4HBA 6 mass% | polyalkylene glycol dimethacrylate 3 mass% | CHA 67 mass% | - | 180 | 38 | 13.6 | aluminum oxide 70 mass% | - | acrylic emulsion 18.0 mass% |
| Example 20 | 3FMA 24 mass% | 4HBA 6 mass% | polyalkylene glycol dimethacrylate 3 mass% | CHA 67 mass% | - | 180 | 38 | 13.6 | aluminum oxide 70 mass% | - | acrylic emulsion 18.0 mass% |

### [Table 1-3]

**Table 1-3**

| | particles A | | | | | | | | particles B | organic particles C | binder |
|---|---|---|---|---|---|---|---|---|---|---|---|
| | fluorine-containing (meth)acrylate monomer and its content (mass%) | (meth)acrylate monomer having a hydroxyl group and its content (mass%) | monomer having 2 or more reactive groups in a molecule and its content (mass%) | (meth)acrylate monomer having a monocyclic hydrocarbon group and its content (mass%) | (meth)acrylate monomer unit substituted by 1 or more alkyl groups and its content (mass%) | average particle diameter (nm) | glass transition temperature (°C) | content of particles A contained in porous layer (mass%) | type and content of particles B contained in porous layer (mass%) | type and content (mass%) | type and content (mass%) |
| Example 21 | 3FMA 23 mass% | 4HBA 6 mass% | polyalkylene glycol dimethacrylate 1 mass% | CHA 70 mass% | - | 185 | 40 | 13.6 | aluminum oxide 70 mass% | - | acrylic emulsion 18.0 mass% |
| Example 22 | 3FMA 23 mass% | 4HBA 6 mass% | polyalkylene glycol dimethacrylate 1 mass% | CHA 70 mass% | - | 185 | 40 | 13.6 | aluminum oxide 70 mass% | - | acrylic emulsion 18.0 mass% |
| Example 23 | 3FMA 22 mass% | 4HBA 3 mass% | polyalkylene glycol dimethacrylate 1 mass% | CHA 74 mass% | - | 188 | 40 | 13.6 | aluminum oxide 70 mass% | - | acrylic emulsion 18.0 mass% |
| Example 24 | 3FMA 22 mass% | 4HBA 3 mass% | polyalkylene glycol dimethacrylate 1 mass% | CHA 74 mass% | - | 188 | 40 | 13.6 | aluminum oxide 70 mass% | - | acrylic emulsion 18.0 mass% |
| Example 25 | 3FMA 22 mass% | 4HBA 2.5 mass% | polyalkylene glycol dimethacrylate 1 mass% | CHA 74.5 mass% | - | 179 | 41 | 13.6 | aluminum oxide 70 mass% | - | acrylic emulsion 18.0 mass% |
| Example 26 | 3FMA 22 mass% | 4HBA 2.5 mass% | polyalkylene glycol dimethacrylate 1 mass% | CHA 74.5 mass% | - | 179 | 41 | 13.6 | aluminum oxide 70 mass% | - | acrylic emulsion 18.0 mass% |
| Example 27 | 3FMA 30 mass% | 4HBA 14 mass% | polyalkylene glycol dimethacrylate 7 mass% | - | MMA28 mass% BA21 mass% | 186 | 41 | 13.6 | aluminum oxide 70 mass% | - | acrylic emulsion 18.0 mass% |
| Example 28 | 3FMA 30 mass% | 4HBA 14 mass% | polyalkylene glycol dimethacrylate 7 mass% | - | MMA28 mass% BA21 mass% | 186 | 41 | 13.6 | aluminum oxide 70 mass% | - | acrylic emulsion 18.0 mass% |
| Example 29 | 3FMA 30 mass% | 4HBA 6 mass% | urethane acrylate 7 mass% | CHA 57 mass% | - | 182 | 41 | 13.6 | aluminum oxide 70 mass% | - | acrylic emulsion 18.0 mass% |
| Example 30 | 3FMA 22 mass% | 4HBA 2.5 mass% | urethane acrylate 1 mass% | CHA 74.5 mass% | - | 179 | 41 | 13.6 | aluminum oxide 70 mass% | - | acrylic emulsion 18.0 mass% |

### [Table 1-4]

**Table 1-4**

| | particles A | | | | | | | | particles B | organic particles C | binder |
|---|---|---|---|---|---|---|---|---|---|---|---|
| | fluorine-containing (meth)acrylate monomer and its content (mass%) | (meth)acrylate monomer having a hydroxyl group and its content (mass%) | monomer having 2 or more reactive groups in a molecule and its content (mass%) | (meth)acrylate monomer having a monocyclic hydrocarbon group and its content (mass%) | (meth)acrylate monomer unit substituted by 1 or more alkyl groups and its content (mass%) | average particle diameter (nm) | glass transition temperature (°C) | content of particles A contained in porous layer (mass%) | type and content of particles B contained in porous layer (mass%) | type and content (mass%) | type and content (mass%) |
| Example 31 | 3FMA 30 mass% | 4HBA 6 mass% | polyalkylene glycol dimethacrylate 7 mass% | CHA 57 mass% | - | 182 | 41 | 25.6 | aluminum oxide 70 mass% | - | water-soluble acrylic 3 mass% |
| Example 32 | 3FMA 22 mass% | 4HBA 2.5 mass% | polyalkylene glycol dimethacrylate 1 mass% | CHA 74.5 mass% | - | 179 | 41 | 25.6 | aluminum oxide 70 mass% | - | water-soluble acrylic 3 mass% |
| Example 33 | 3FMA 23 mass% | 4HBA 6 mass% | - | CHA 71 mass% | - | 177 | 43 | 13.6 | aluminum oxide 70 mass% | - | acrylic emulsion 18.0 mass% |
| Example 34 | 3FMA 22 mass% | 4HBA 2.5 mass% | - | CHA 75.5 mass% | - | 184 | 43 | 13.6 | aluminum oxide 70 mass% | - | acrylic emulsion 18.0 mass% |
| Example 35 | 3FMA 32 mass% | 4HBA 6 mass% | polyalkylene glycol dimethacrylate 10 mass% | CHA 52 mass% | - | 180 | 43 | 13.6 | aluminum oxide 70 mass% | - | acrylic emulsion 18.0 mass% |
| Example 36 | 3FMA 45 mass% | 4HBA 30 mass% | - | CHA 25 mass% | - | 180 | 44 | 13.6 | aluminum oxide 70 mass% | - | acrylic emulsion 18.0 mass% |
| Example 37 | 3FMA 20 mass% | 4HBA 6 mass% | polyalkylene glycol dimethacrylate 1 mass% | CHA 73 mass% | - | 177 | 38 | 13.6 | aluminum oxide 70 mass% | - | acrylic emulsion 18.0 mass% |
| Example 38 | 3FMA 15 mass% | 4HBA 6 mass% | polyalkylene glycol dimethacrylate 1 mass% | CHA 78 mass% | - | 175 | 32 | 13.6 | aluminum oxide 70 mass% | - | acrylic emulsion 18.0 mass% |
| Example 39 | 3FMA 30 mass% | 4HBA 6 mass% | polyalkylene glycol dimethacrylate 7 mass% | CHA 57 mass% | - | 182 | 41 | 23.7 | aluminum oxide 60 mass% | - | acrylic emulsion 18.0 mass% |
| Example 40 | 3FMA 30 mass% | 4HBA 6 mass% | polyalkylene glycol dimethacrylate 7 mass% | CHA 57 mass% | - | 182 | 41 | 28.8 | aluminum oxide 55 mass% | - | acrylic emulsion 18.0 mass% |

### [Table 1-5]

**Table 1-5**

| | particles A | | | | | | | | particles B | organic particles C | binder |
|---|---|---|---|---|---|---|---|---|---|---|---|
| | fluorine-containing (meth)acrylate monomer and its content (mass%) | (meth)acrylate monomer having a hydroxyl group and its content (mass%) | monomer having 2 or more reactive groups in a molecule and its content (mass%) | (meth)acrylate monomer having a monocyclic hydrocarbon group and its content (mass%) | (meth)acrylate monomer unit substituted by 1 or more alkyl groups and its content (mass%) | average particle diameter (nm) | glass transition temperature (°C) | content of particles A contained in porous layer (mass%) | type and content of particles B contained in porous layer (mass%) | type and content (mass%) | type and content (mass%) |
| Example 41 | 3FMA 30 mass% | 4HBA 10 mass% | polyalkylene glycol dimethacrylate 7 mass% | CHA 53 mass% | - | 182 | 41 | 13.6 | aluminum oxide 70 mass% | - | vinylidene fluoride-hexafluoroprop ylene copolymer 18.0 mass% |
| Example 42 | 3FMA 30 mass% | 4HBA 10 mass% | polyalkylene glycol dimethacrylate 7 mass% | CHA 53 mass% | - | 182 | 41 | 13.6 | aluminum oxide 70 mass% | - | vinylidene fluoride-hexafluoroprop ylene copolymer 24.0 mass% |
| Example 43 | 3FMA 30 mass% | 4HBA 10 mass% | polyalkylene glycol dimethacrylate 7 mass% | CHA 53 mass% | - | 182 | 41 | 13.6 | aluminum oxide 70 mass% | - | vinylidene fluoride-hexafluoroprop ylene copolymer 18.0 mass% |
| Comparative example 1 | 3FMA 30 mass% | 4HBA 2 mass% | - | CHA 68 mass% | - | 216 | 45 | 13.6 | aluminum oxide 70 mass% | - | acrylic emulsion 18.0 mass% |
| Comparative example 2 | - | - | - | - | - | - | - | 0 | aluminum oxide 83 mass% | - | acrylic emulsion 18.5 mass% |
| Comparative example 3 | 3FMA 30 mass% | 4HBA 35 mass% | polyalkylene glycol dimethacrylate 7 mass% | CHA 28 mass% | - | - | - | - | - | - | - |

### [Table 2]

**Table 2**

| | porous layer thickness (µm) | air permeability (sec/100 cc) | coat film appearance | thermal shrinkage (thermal dimensional stability) | adhesion to electrode evaluation 1 | adhesion to electrode evaluation 2 | Adhesion to electrode in electrolyte | discharge load characteristics | charge-discharge cycle characteristics |
|---|---|---|---|---|---|---|---|---|---|
| Example 1 | 6.0 | 173 | excellent | outstanding | excellent | excellent | excellent | good | good |
| Example 2 | 4.0 | 142 | excellent | excellent | excellent | excellent | excellent | excellent | excellent |
| Example 3 | 6.0 | 165 | excellent | outstanding | good | good | excellent | excellent | excellent |
| Example 4 | 4.0 | 125 | excellent | outstanding | good | good | excellent | outstanding | outstanding |
| Example 5 | 6.0 | 180 | excellent | outstanding | excellent | excellent | good | good | good |
| Example 6 | 4.0 | 155 | excellent | excellent | excellent | excellent | good | excellent | excellent |
| Example 7 | 6.0 | 216 | excellent | outstanding | outstanding | outstanding | fair | good | good |
| Example 8 | 4.0 | 165 | excellent | excellent | outstanding | outstanding | fair | excellent | excellent |
| Example 9 | 6.0 | 185 | excellent | outstanding | excellent | excellent | fair | excellent | excellent |
| Example 10 | 4.0 | 135 | excellent | outstanding | excellent | excellent | fair | outstanding | outstanding |
| Example 11 | 6.0 | 136 | excellent | outstanding | excellent | excellent | fair | outstanding | outstanding |
| Example 12 | 4.0 | 114 | excellent | outstanding | excellent | excellent | fair | outstanding | outstanding |
| Example 13 | 6.0 | 117 | excellent | outstanding | fair | fair | fair | outstanding | outstanding |
| Example 14 | 6.0 | 213 | excellent | outstanding | outstanding | outstanding | fair | good | good |
| Example 15 | 6.0 | 203 | excellent | outstanding | outstanding | outstanding | fair | good | good |
| Example 16 | 4.0 | 159 | excellent | excellent | outstanding | outstanding | fair | excellent | excellent |
| Example 17 | 4.0 | 139 | excellent | outstanding | outstanding | outstanding | fair | outstanding | outstanding |
| Example 18 | 4.0 | 142 | excellent | outstanding | outstanding | outstanding | fair | outstanding | outstanding |
| Example 19 | 6.0 | 216 | excellent | outstanding | excellent | excellent | excellent | excellent | excellent |
| Example 20 | 4.0 | 165 | excellent | excellent | excellent | excellent | excellent | outstanding | outstanding |
| Example 21 | 6.0 | 205 | excellent | outstanding | excellent | excellent | good | excellent | excellent |
| Example 22 | 4.0 | 160 | excellent | excellent | excellent | excellent | good | outstanding | outstanding |
| Example 23 | 6.0 | 202 | excellent | outstanding | good | good | excellent | outstanding | outstanding |
| Example 24 | 4.0 | 163 | excellent | excellent | good | good | excellent | outstanding | outstanding |
| Example 25 | 6.0 | 200 | excellent | outstanding | good | good | excellent | outstanding | outstanding |
| Example 26 | 4.0 | 158 | excellent | excellent | good | good | excellent | outstanding | outstanding |
| Example 27 | 6.0 | 180 | excellent | outstanding | outstanding | outstanding | fair | good | good |
| Example 28 | 4.0 | 147 | excellent | excellent | outstanding | outstanding | fair | excellent | excellent |
| Example 29 | 6.0 | 185 | excellent | outstanding | outstanding | outstanding | excellent | good | good |
| Example 30 | 6.0 | 195 | excellent | outstanding | good | good | excellent | outstanding | outstanding |
| Example 31 | 6.0 | 180 | excellent | outstanding | excellent | excellent | excellent | excellent | excellent |
| Example 32 | 6.0 | 190 | excellent | outstanding | fair | fair | excellent | outstanding | outstanding |
| Example 33 | 6.0 | 182 | excellent | outstanding | good | good | fair | good | good |
| Example 34 | 6.0 | 189 | excellent | outstanding | fair | fair | fair | excellent | excellent |
| Example 35 | 6.0 | 180 | excellent | outstanding | excellent | outstanding | outstanding | good | good |
| Example 36 | 6.0 | 182 | excellent | outstanding | outstanding | outstanding | fair | fair | fair |
| Example 37 | 6.0 | 190 | excellent | outstanding | good | good | good | good | good |
| Example 38 | 6.0 | 195 | excellent | outstanding | fair | fair | good | good | good |
| Example 39 | 6.0 | 220 | excellent | good | outstanding | outstanding | excellent | good | good |
| Example 40 | 6.0 | 230 | excellent | fair | outstanding | outstanding | outstanding | good | good |
| Example 41 | 6.0 | 185 | excellent | outstanding | excellent | excellent | excellent | good | good |
| Example 42 | 6.0 | 210 | excellent | outstanding | excellent | excellent | outstanding | good | good |
| Example 43 | 6.0 | 190 | excellent | outstanding | excellent | excellent | excellent | good | good |
| Comparative example 1 | 6.0 | 165 | excellent | outstanding | poor | poor | poor | good | good |
| Comparative example 2 | 6.0 | 130 | excellent | outstanding | poor | poor | poor | good | good |
| Comparative example 3 | - | - | - | - | - | - | - | - | - |

## Claims

1. A porous film comprising a porous base and a porous layer containing particles A disposed at least on one side thereof, wherein the particles A contain a mixture including a polymer formed from a fluorine-containing (meth)acrylate monomer and a polymer formed from a (meth)acrylate monomer having a hydroxyl group or a copolymer including a fluorine-containing (meth)acrylate monomer and a (meth)acrylate monomer having a hydroxyl group, with the (meth)acrylate monomer having a hydroxyl group accounting for more than 2 mass% and 30 mass% or less of all components of the particles A, which account for 100 mass%.

2. A porous film as set forth in claim 1, wherein the (meth)acrylate monomer having a hydroxyl group is **characterized in that** a homopolymer formed from the monomer has a glass transition temperature of -100°C or more and 0°C or less, measured according to the description.

3. A porous film as set forth in either claim 1 or 2, wherein the (meth)acrylate monomer having a hydroxyl group is at least one selected from the group consisting of 2-hydroxyethyl acrylate, 4-hydroxybutyl acrylate, and 2-hydroxypropyl acrylate.

4. A porous film as set forth in any one of claims 1 to 3, wherein the copolymer including a fluorine-containing (meth)acrylate monomer and a (meth)acrylate monomer having a hydroxyl group further includes a monomer having two or more reactive groups in a molecule, with the monomer having two or more reactive groups in a molecule accounting for 1 mass% or more and 10 mass% or less of the particles A.

5. A porous film as set forth in claim 4, wherein the monomer having two or more reactive groups in a molecule is a (meth)acrylate having two or more reactive groups in a molecule.

6. A porous film as set forth in either claim 4 or 5, wherein the monomer having two or more reactive groups in a molecule is alkylene glycol di(meth)acrylate or urethane di(meth)acrylate.

7. A porous film as set forth in any one of claims 4 to 6, wherein the monomer having two or more reactive groups in a molecule is **characterized in that** a homopolymer formed from the monomer has a glass transition temperature of -50°C or more and 0°C or less.

8. A porous film as set forth in any one of claims 1 to 7, wherein the copolymer including a fluorine-containing (meth)acrylate monomer and a (meth)acrylate monomer having a hydroxyl group further includes at least one monomer selected from the group consisting of isobornyl (meth)acrylate, dicyclopentanyl (meth)acrylate, dicyclopentenyl (meth)acrylate, cyclohexyl (meth)acrylate, and benzyl (meth)acrylate.

9. A porous film as set forth in any one of claims 1 to 8, wherein the copolymer including a fluorine-containing (meth)acrylate monomer and a (meth)acrylate monomer having a hydroxyl group further includes a (meth)acrylate monomer having a monocyclic hydrocarbon group or a (meth)acrylate monomer substituted by at least one alkyl group.

10. A porous film as set forth in claim 9, wherein the (meth)acrylate monomer having a monocyclic hydrocarbon group accounts for 20 mass% or more and 80 mass% or less of all components of the particles A, which account for 100 mass%.

11. A porous film as set forth in any one of claims 1 to 10, wherein the fluorine-containing (meth)acrylate monomer contained in the particles A accounts for more than 20 mass% and 80 mass% or less.

12. A porous film as set forth in any one of claims 1 to 11, wherein the porous layer contains particles B that are inorganic particles.

13. A porous film as set forth in claim 12, wherein the particles B contained in the porous layer account for 60 mass% or more and 95 mass% or less of all components of the porous layer, which account for 100 mass%.

14. A porous film as set forth in any one of claims 1 to 13, wherein the porous layer contains fluorine-free organic particles C.

15. A secondary battery separator comprising a porous film as set forth in any one of claims 1 to 14.

16. A secondary battery comprising a secondary battery separator as set forth in claim 15.

## Patentansprüche

1. Poröser Film, umfassend eine poröse Basis und eine poröse Schicht, die Teilchen A enthält, die auf mindestens einer Seite davon angeordnet sind, wobei die Teilchen A eine Mischung enthalten, die ein Polymer, das aus einem fluorhaltigen (Meth)acrylatmonomer gebildet ist, und ein Polymer, das aus einem (Meth)acrylatmonomer mit einer Hydroxylgruppe gebildet ist, oder ein Copolymer enthält, das ein fluorhaltiges (Meth)acrylatmonomer und ein (Meth)acrylatmonomer mit einer Hydroxylgruppe enthält, wobei das (Meth)acrylatmonomer mit einer Hydroxylgruppe mehr als 2 Massen-% und 30 Massen-% oder weniger aller Komponenten der Teilchen A ausmacht, die 100 Massen-% ausmachen.

2. Poröser Film gemäß Anspruch 1, wobei das (Meth)acrylatmonomer mit einer Hydroxylgruppe **dadurch gekennzeichnet ist, dass** ein Homopolymer, das aus dem Monomer gebildet ist, eine Glasübergangstemperatur von -100 °C oder mehr und 0 °C oder weniger, gemessen gemäß der Beschreibung, aufweist.

3. Poröser Film gemäß Anspruch 1 oder 2, wobei das (Meth)acrylatmonomer mit einer Hydroxylgruppe mindestens eines ausgewählt aus der Gruppe bestehend aus 2-Hydroxyethylacrylat, 4-Hydroxybutylacrylat und 2-Hydroxypropylacrylat ist.

4. Poröser Film gemäß einem der Ansprüche 1 bis 3, wobei das Copolymer, das ein fluorhaltiges (Meth)acrylatmonomer und ein (Meth)acrylatmonomer mit einer Hydroxylgruppe enthält, ferner ein Monomer mit zwei oder mehr reaktiven Gruppen in einem Molekül enthält, wobei das Monomer mit zwei oder mehr reaktiven Gruppen in einem Molekül 1 Massen-% oder mehr und 10 Massen-% oder weniger der Teilchen A ausmacht.

5. Poröser Film gemäß Anspruch 4, wobei das Monomer mit zwei oder mehr reaktiven Gruppen in einem Molekül ein (Meth)acrylat mit zwei oder mehr reaktiven Gruppen in einem Molekül ist.

6. Poröser Film gemäß Anspruch 4 oder 5, wobei das Monomer mit zwei oder mehr reaktiven Gruppen in einem Molekül Alkylenglycoldi(meth)acrylat oder Urethandi(meth)acrylat ist.

7. Poröser Film gemäß einem der Ansprüche 4 bis 6, wobei das Monomer mit zwei oder mehr reaktiven Gruppen in einem Molekül **dadurch gekennzeichnet ist, dass** ein aus dem Monomer gebildetes Homopolymer eine Glasübergangstemperatur von -50 °C oder mehr und 0 °C oder weniger aufweist.

8. Poröser Film gemäß einem der Ansprüche 1 bis 7, wobei das Copolymer, das ein fluorhaltiges (Meth)acrylatmonomer und ein (Meth)acrylatmonomer mit einer Hydroxylgruppe enthält, ferner mindestens ein Monomer ausgewählt aus der Gruppe bestehend aus Isobornyl(meth)acrylat, Dicyclopentanyl(meth)acrylat, Dicyclopentenyl(meth)acrylat, Cyclohexyl(meth)acrylat und Benzyl(meth)acrylat enthält.

9. Poröser Film gemäß einem der Ansprüche 1 bis 8, wobei das Copolymer, das ein fluorhaltiges (Meth)acrylatmonomer und ein (Meth)acrylatmonomer mit einer Hydroxylgruppe enthält, ferner ein (Meth)acrylatmonomer mit einer monocyclischen Kohlenwasserstoffgruppe oder ein (Meth)acrylatmonomer, das mit mindestens einer Alkylgruppe substituiert ist, enthält.

10. Poröser Film gemäß Anspruch 9, wobei das (Meth)acrylatmonomer mit einer monocyclischen Kohlenwasserstoffgruppe 20 Massen-% oder mehr und 80 Massen- % oder weniger aller Komponenten der Teilchen A ausmacht, die 100 Massen-% ausmachen.

11. Poröser Film gemäß einem der Ansprüche 1 bis 10, wobei das fluorhaltige (Meth)acrylatmonomer, das in den Teilchen A enthalten ist, mehr als 20 Massen-% und 80 Massen-% oder weniger ausmacht.

12. Poröser Film gemäß einem der Ansprüche 1 bis 11, wobei die poröse Schicht Teilchen B, die anorganische Teilchen sind, enthält.

13. Poröser Film gemäß Anspruch 12, wobei die Teilchen B, die in der porösen Schicht enthalten sind, 60 Massen-% oder mehr und 95 Massen-% oder weniger aller Komponenten der porösen Schicht ausmachen, die 100 Massen-% ausmachen.

14. Poröser Film gemäß einem der Ansprüche 1 bis 13, wobei die poröse Schicht fluorfreie organische Teilchen C enthält.

15. Sekundärbatterieseparator, umfassend einen porösen Film gemäß einem der Ansprüche 1 bis 14.

16. Sekundärbatterie, umfassend einen Sekundärbatterieseparator gemäß Anspruch 15.

## Revendications

1. Film poreux comprenant une base poreuse et une couche poreuse contenant des particules A disposées sur au moins un côté de celle-ci, où les particules A contiennent un mélange incluant un polymère formé à partir d'un monomère (méth)acrylate contenant du fluor et un polymère formé à partir d'un monomère (méth)acrylate ayant un groupe hydroxyle ou un copolymère incluant un monomère (méth)acrylate contenant du fluor et un monomère (méth)acrylate ayant un groupe hydroxyle, où le monomère (méth)acrylate ayant un groupe hydroxyle représente plus de 2 % en masse et 30 % en masse ou moins de tous les composants des particules A qui représentent 100 % en masse.

2. Film poreux selon la revendication 1, où le monomère (méth)acrylate ayant un groupe hydroxyle est **caractérisé en ce qu'**un homopolymère formé à partir du monomère a une température de transition vitreuse de -100 °C ou plus et 0 °C ou moins, mesurée selon la description.

3. Film poreux selon la revendication 1 ou 2, où le monomère (méth)acrylate ayant un groupe hydroxyle est au moins un choisi dans le groupe constitué par l'acrylate de 2-hydroxyéthyle, l'acrylate de 4-hydroxybutyle et l'acrylate de 2-hydroxypropyle.

4. Film poreux selon l'une quelconque des revendications 1 à 3, où le copolymère incluant un monomère (méth)acrylate contenant du fluor et un monomère (méth)acrylate ayant un groupe hydroxyle inclut en outre un monomère ayant deux groupes réactifs ou plus dans une molécule, où le monomère ayant deux groupes réactifs ou plus dans une molécule représente 1 % en masse ou plus et 10 % en masse ou moins des particules A.

5. Film poreux selon la revendication 4, où le monomère ayant deux groupes réactifs ou plus dans une molécule est un (méth)acrylate ayant deux groupes réactifs ou plus dans une molécule.

6. Film poreux selon la revendication 4 ou 5, où le monomère ayant deux groupes réactifs ou plus dans une molécule est le di(méth)acrylate d'alkylène glycol ou le di(méth)acrylate d'uréthane.

7. Film poreux selon l'une quelconque des revendications 4 à 6, où le monomère ayant deux groupes réactifs ou plus dans une molécule est **caractérisé en ce qu'**un homopolymère formé à partir du monomère a une température de transition vitreuse de -50 °C ou plus et 0 °C ou moins.

8. Film poreux selon l'une quelconque des revendications 1 à 7, où le copolymère incluant un monomère (méth)acrylate contenant du fluor et un monomère (méth)acrylate ayant un groupe hydroxyle inclut en outre au moins un monomère choisi dans le groupe constitué par le (méth)acrylate d'isobornyle, le (méth)acrylate de dicyclopentanyle, le (méth)acrylate de dicyclopentényle, le (méth)acrylate de cyclohexyle et le (méth)acrylate de benzyle.

9. Film poreux selon l'une quelconque des revendications 1 à 8, où le copolymère incluant un monomère (méth)acrylate contenant du fluor et un monomère (méth)acrylate ayant un groupe hydroxyle inclut en outre un monomère (méth)acrylate ayant un groupe hydrocarbure monocyclique ou un monomère (méth)acrylate substitué par au moins un groupe alkyle.

10. Film poreux selon la revendication 9, où le monomère (méth)acrylate ayant un groupe hydrocarbure monocyclique représente 20 % en masse ou plus et 80 % en masse ou moins de tous les composants des particules A qui représentent 100 % en masse.

11. Film poreux selon l'une quelconque des revendications 1 à 10, où le monomère (méth)acrylate contenant du fluor contenu dans les particules A représente plus de 20 % en masse et 80 % en masse ou moins.

12. Film poreux selon l'une quelconque des revendications 1 à 11, où la couche poreuse contient des particules B qui sont des particules inorganiques.

13. Film poreux selon la revendication 12, où les particules B contenues dans la couche poreuse représentent 60 % en masse ou plus et 95 % en masse ou moins de tous les composants de la couche poreuse qui représentent 100 % en masse.

14. Film poreux selon l'une quelconque des revendications 1 à 13, où la couche poreuse contient des particules organiques C sans fluor.

15. Séparateur de batterie secondaire comprenant un film poreux selon l'une quelconque des revendications 1 à 14.

16. Batterie secondaire comprenant un séparateur de batterie secondaire selon la revendication 15.
